# EUROPEAN PATENT SPECIFICATION

(11) **EP 3 039 412 B1**
(45) Date of publication and mention of the grant of the patent: **07.10.2020**
(21) Application number: 14841311.5
(22) Date of filing: 25.08.2014
(51) Int. Cl.: G01N 27/00, G01N 1/22, G01N 1/40

(54) **CAPTURING ASSAYABLE AGENTS IN A DIELECTRIC FLUID UTILIZING ELECTROKINETIC DEVICE COMPRISING REMOVABLE ELECTRODES**
ERFASSUNG PRÜFBARER MITTEL IN EINER DIELEKTRISCHEN FLÜSSIGKEIT MITTELS EINER ELEKTROKINETISCHEN VORRICHTUNG MIT ENTFERNBAREN ELEKTRODEN
CAPTURER DES AGENTS DOSABLES DANS UN FLUIDE DIÉLECTRIQUE AU MOYEN D'UN DISPOSITIF ÉLECTROCINÉTIQUE COMPRENANT UNE ÉLECTRODE AMOVIBLE

(30) Priority: 27.08.2013 US 201361870348 P
(43) Date of publication of application: 06.07.2016
(73) Proprietor: Inspirotec LLC, North Chicago, IL 60064 (US)
(72) Inventor: GORDON, Julian, North Chicago, IL 60064 (US)
(74) Representative: FRKelly
(86) International application number: PCT/US2014/052472
(87) International publication number: WO 2015/031234

(56) References cited:
- JP-A- 2004 170 287
- US-A- 3 305 619
- US-A1- 2002 160 255
- US-A1- 2002 160 255
- US-A1- 2008 009 930
- US-A1- 2008 009 930
- US-A1- 2009 188 390
- US-A1- 2012 135 510
- US-A1- 2012 135 510
- CUSTIS ET AL: "Quantitative measurement of airborne allergens from dust mites, dogs, and cats using an ion-charging device", CLINICAL & EXPERIMENTAL ALLERGY : JOURNAL OF THE BRITISH SOCIETY FOR ALLERGY AND CLINICAL IMMUNOLOGY, WILEY INTERSCIENCE, UK , vol. 33, no. 7 15 July 2003 (2003-07-15), pages 986-991, XP009518122, ISSN: 0954-7894, DOI: 10.1046/J.1365-2222.2003.01706.X Retrieved from the Internet: URL:https://onlinelibrary.wiley.com/doi/fu ll/10.1046/j.1365-2222.2003.01706.x [retrieved on 2020-01-14]

## Description

### BACKGROUND OF THE INVENTION

### 1. Field of the Invention.

The present invention relates to the collection of and sampling of assayable agents in a dielectric medium. This includes, but is not limited to, sampling air for agents whose presence or absence is determinable by bio-specific assays. The field includes sampling of air for biological agents, direction to, and deposition on, a collection means for an assay device. The agent-specific assays may include immunoassays, nucleic acid hybridization assays, or any other assays entailing ligand - antiligand interactions. Assays may include, but are not limited to, detection means which are colorometric, fluorescent, turbidimetric, electrochemical or voltammetric. Agents assayed include, but are not limited to, bio-warfare agents, pathogens, allergens or pollutants. Pathogens include screening for infectious airborne agents such as anthrax or tuberculosis organisms. Further dielectric media may include sampling of dielectric fluid medium such as oil for the food industry, or petrochemical and industrial oil.

### 2. Description of the Prior Art.

In the prior art, there exist many examples of collection of agents from the air for bioassay. For example, the following publications describe various methods of allergen, pathogen and toxin collection for assay:
Yao et al (2009) in Aerosol Science volume 40, pages 492-502
Noss et al (2008) in Applied and Environmental Microbiology, volume 74, pages 5621-5627
King et al (2007) in Journal of Allergy and Clinical Immunology, volume 120, pages 1126-31
Earle et al (2007) in Journal of Allergy and Clinical Immunology, volume 119, pages 428-433
Peters et al (2007) in Journal of Urban Health: Bulletin of the New York Academy of Medicine, volume 84, pages 185-197
Yao and Mainelis (2006) in Journal of Aerosol Science, volume 37, pages 513-527
Platts-Mills et al (2005) in Journal of Allergy and Clinical Immunology, volume 116, pages 384-389
Sercombe et al (2004) in Allergy, volume 60, pages 515-520
Custis et al (2003) in Clinical and Experimental Allergy, volume 33, pages 986-991
Polzius et al (2002) in Allergy, volume 57, pages 143-145
Tsay et al (2002) in Clinical and Experimental Allergy, volume 32, pages 1596-1601.
Parvaneh et al (2000) in Allergy, volume 55, pages 1148-1154
McNerney et al (2010) in BMC Infectious Diseases, volume 10, pages 161-166 and device in US patent 7,384,793

Other known methods of sample collection include trapping of volatile organic compounds (VOC) on activated carbon, de-sorption and analysis by mass spectrometry. See Phillips et al (2010) in Tuberculosis, volume 90, pages 145-151 and references therein. VOC's are not considered encompassed by the present invention since the assays are strictly chemical in nature, and are not bio-specific as defined here. By bio-specific is meant assays wherein the result is determined by a biological specificity such as nucleic acid specificity, antibody specificity, receptor-ligand specificity and the like. While diagnostic specificity may be achieved by VOC analysis, this is inferred by presence and amount of groups of defined organic compounds.

The foregoing prior art publications describe "dry" methods using pumping and filtration, wiping, passive deposition, electrokinetic transport etc; usually followed by an extraction step and application of the extract to an assay.

Methods for collection in a liquid stream have been described in the patent literature:
Yuan and Lin in US Patent Application 2008/0047429A1
Saski et al in US Patent 6,484,594 issued in 2002.

While efficiently collecting agents from the air, such liquid streaming systems inevitably result in high dilution of the sample. There is a consequent trade-off in sensitivity unless the agents are re-concentrated.

Northrup et al in US Patents 7,705,739 and 7,633,606 describe an autonomously running system for air sampling and determination of airborne substances therein. They do not specify the exact method of air sampling, nor detail how it is transferred to an assay system,

There exist numerous commercially available systems for air purification based on filtration or electrostatic precipitation. For a general description see the Environmental Protection Agency article "Guide to Air Cleaners in the Home", U.S. EPA/OAR/ORIA/Indoor Environments Division (MC-6609J) EPA 402-F-08-004, May 2008. Numerous commercial examples of systems exist using either High Efficiency Particulate Air (HEPA) filters or electrostatic precipitation filters. Such systems are widely used for removal of particulate matter or allergens from air, including as part of domestic heating, ventilation and air conditioning (HVAC) systems. HEPA filters have the advantage of removal of particles down to the micron size range, whereas electrostatic precipitation methods have the advantage of entailing high volume flow with little or no pressure differential. See US patent by Bourgeois, 3,191,362 as a detailed example for the technical specification of an electrostatic precipitation system. While efficiently removing agents from the air, such air purification systems do not lend themselves to collection of samples for analysis.

Electrokinetic-based air cleaning systems have been developed and formerly commercialized by the company Sharper Image (but now discontinued) under the trade name Ionic Breeze. The original electrokinetic principle was enunciated by Brown in US patent 2,949,550. This was further improved by Lee in US patent 4,789,801 for improving airflow and minimizing ozone generation. Further improvements for the commercially available system are described in US patents by Taylor and Lee, 6,958,134; Reeves et al, 7,056,370; Botvinnik, 7,077,890; Lau et al, 7,097,695; Taylor et al, 7,311,762. In the foregoing descriptions of devices using electrokinetic propulsion, a common element is a high voltage electrode consisting of a wire. A very steep voltage gradient is generated orthogonally to the wire because of the very small cross-sectional area of the wire. The high voltage gradient causes the creation of a plasma consisting of charged particles, and kinetic energy is imparted to the charged particles by the high voltage gradient. The resulting net air flow is created by exchange of kinetic energy between charged and uncharged particles, and the net air flow is directed by the juxtaposition of planar electrodes which are at zero or opposite sign voltage to that of the wire electrode. Charged particles are electrostatically precipitated on to the planar electrodes, which may periodically be removed for cleaning. This body of work is directed toward air purification, not sample collection. However, as first described by Custis et al (2003), the Ionic Breeze device has been adapted for sample collection for allergen analysis by wiping down the electrodes with a paper tissue. The allergens were extracted from the tissue and subject to an immuno-assay. The Ionic Breeze was also used in the works of Peters et al (2007) and Platts-Mills et al (2005) for allergen collection for immunoassay analysis. Earlier, Parvaneh et al (2000) described an ionizer device with a "metal cup having a conductive surface as a collector plate", from which allergens are extracted for assay. It is not evident how the sample is collected on the inside of a metal cup and does not adhere to the entire surface. The device was made by Airpoint AB, Stockholm, Sweden. However, there is no public information concerning the manufacture or sale of such a product by Airpoint AB, there is insufficient information for one skilled in the art to be able to understand the details of the device, and no similar device was used by the same authors in subsequent publications on environmental allergen detection. There is no mention of focusing of the sample into a potential well created by a voltage gradient.

Yao et al (2009) and Yao and Mainelis (2006) have described methods for collection of bio-assayable agents on to an assay means or device. Yao and Manielis (2006) describe blocks of agar gel in electrical contact with planar electrodes, and Yao et al (2009) describe a microtiter plate interposed between planar electrodes. Both of these works describe a flow of air driven by a pump, and electrostatically precipitating the agents to be analyzed on to the assay means. The electrodes and the agar blocks have substantially the same area in these works.

McNerney et al (2010) describe a breathalyzer device, where the individual breathes or coughs into a breathing tube, the sample collects on the internal surface of a tube, is scraped with a plunger on to an optical biosensor, an immunological binding reaction is performed and the biosensor utilizes an evanescent wave illumination system to determine the presence or absence of M. tuberculosis by scattered light.

US 2012/0135510 relates to electrokinetic devices and methods are described with the purpose of collecting as sayable agents from a dielectric fluid medium. Electrokinetic flow may be induced by the use ofplasma generation at high voltage electrodes and consequent transport of charged particles in an electric voltage gradient. In one embodiment, the agents are directed electrokinetically to the sample collection assay device with no intermediate transfer steps. The agents are directed by creation of an electrokinetic potential well, which will effect their capture on to an assay device. Environmental agents such as biowarfare agents, pathogens, allergens or pollutants are collected autonomously on to the assay device, without any human intervention. The dielectric fluid medium, such as air, is sampled by electrokinetic propulsion with no moving parts or optionally, by transporting the dielectric fluid by a fan, pump or by breath. A further embodiment for collection of pathogen samples entails breathing into a tube where the sample is exposed to an electric plasma in the neighborhood of a high voltage electrode or electrodes, further transported by the breath through a potential well created at a sample collection device, where charge particles are electroprecipitated. The dielectric fluid medium may further include non-conductive liquids, such as oils. Oils may be sampled for the presence of contaminants, contaminating organisms or bio-degrading organisms.

JP 2004 170287 relates to a device, atmospheric air is sucked by a pump into a collecting vessel storing a discharge electrode and a dust collecting electrode in its inside, and the suspended particulate matter contained in the atmospheric air is charged to be collected on the collecting electrode, and the device is provided with an opening and closing mechanism for opening and closing the capturing and collecting vessel, and a replacing mechanism for replacing the dust collecting electrode inside the vessel with the dust collecting electrode before use. The collecting electrode is automatically replaced thereby with an unused dust collecting electrode in every capture collection of suspended particulate matter onto the electrode over a prescribed time, and the suspended particulate matter is continuously collected over a long period without depending on manual operation.

US2009/188390 There is provided an electrostatic precipitator comprising air inlet means to a conduit for the passage of an air flow containing particles and means generating a focusing electrostatic field within the conduit substantially orthogonal to the air flow in which the generating means comprise a two dimensional surface electrode including an ion source and an earthed counter electrode and in which the air inlet means and the surface electrode are adapted to direct ion substantially against the direction of the air flow in the conduit.

### SUMMARY OF THE INVENTION

The present invention encompasses a method for analyzing aerosol particles in accordance with claim 1. Advantageous features are defined in the dependent claims.

### BRIEF DESCRIPTION OF THE DRAWINGS

Fig 1 is a schematic cross-sectional representation of a prior art device for electrostatic precipitation as part of a HVAC system. This has been derived from technical literature from commercial suppliers;
Fig 2. is a schematic cross-sectional representation of the Ionic Breeze prior art device, as published by Custis et al;
Fig 3. is a cross-sectional representation of a device not forming part of the present invention, wherein an collection means and assay device is located adjacent to a plasma stream propelled by a fan;
Fig 4. is a cross-sectional representation of the assay device showing a detail of Fig 3;
Fig 5 is a cross-sectional representation of a device not forming part of the present invention, wherein the flow is achieved by electrokinetic propulsion, and the collection means of the assay device is adjacent to an aperture in a planar electrode of the electrokinetic propulsion device;
Fig 6. represents a schematic cross section of an electrokinetic flow device wherein the assay device is a reel-to-reel collection device. The cross section of this figure corresponds to section X...X of Fig 5;
Figs 7a, b and c are various outputs from a computer simulation based on the prior art Ionic Breeze device. In this and all following figures, a is the computer-aided design (CAD) input to simulation, b is the output represented by contour lines of voltage and c is the output represented as a 3-dimensional plot with voltage as the third dimension;
Figs 8a, b and c are similar to the simulation of the prior art device of Figs 7a. b and c, with a variation on the electrode geometry;
Figs 9a, b and c from a computer simulation of a further variation of Figs 7a, b and c and 8a, b and c showing a simplification of the prior art device with a reduction in the number of electrodes;
Figs 10a, b and c are outputs from the computer simulation of the foregoing figures showing a further simplification and being representative of the prior art device in US patent 2,949,550;
Figs 11a, b and c are outputs from the computer simulation of a prior are device corresponding to that of Figs 7a, b and c with the juxtaposition of additional electrodes upstream, as described in US patent 6,958,134;
Figs 12a, b and c are outputs of the computer simulation of the present invention with an electrode creating a potential well downstream to the planar electrodes;
Figs 13a, b and c are outputs of the computer simulation of the present invention with an electrode creating a potential well adjacent to an aperture in a planar electrode;
Figs 14a, b and c are outputs of the computer simulation of the present invention similar to Fig 13a, b and c, but with an assay device interposed in the potential well;
Figs 15a, b and c are outputs of the computer simulation of the present invention similar to Fig 14a, b and c, but with an assay device interposed in the potential well, the assay device having a different dielectric constant from that in Figs 14a, b and c;
Figs 16a, b and c are outputs of the computer simulation of the present invention similar to Fig 13a, b and c, but with elements of assay device on both sides of electrode creating potential well;
Figs 17. a, b and c are outputs of the computer simulation of the present invention similar to Fig 10a, b and c, but additionally with an electrode creating a potential well downstream to the planar electrode;
Figs 18a, b and c are outputs of the computer simulation of the present invention similar to Figs 17a, b and c but with an assay device interposed in the potential well;
Figs 19a, b and c are outputs of the computer simulation of the present invention, with electrodes angled so as to enhance the air flow into the potential well;
Figs 20-25 are outputs of a higher level computer simulation program which models electrostatic fields in three dimensions;
Fig 20a, b, c and d represent CAD outputs as various stereographic projections of a device according to the present invention;
Figs 21a, b, c, d, e, f, g and h are electric field representations in successive planes proceeding along one axis of the device of Fig 20;
Figs 22a, b c and d are electric field representations in successive planes along a second axis of the device of Fig 20;
Figs 23a, b, c, d, e, f are electric field representations in successive planes along a third axis of the device of Fig 20;
Figs 24a, b, c and d represent CAD outputs as various stereographic projections of a further device according to the present invention;
Figs 25a and b are electric field representations in two planes along one axis of the device of Fig 24;
Figs 26 is a perspective view of an ionic propulsion device using removable electrodes;
Fig 27 is a disassembled view of a removable carrier assembly for use with the ionic propulsion device of Fig 26;
Figs 28A and 28B are perspective views of a carrier for the removable carrier assembly;
Figs 29A and 29B are views of a latch for the removable carrier assembly;
Figs 30A and 30B are cut away views of the carrier with the latch in an unlatched position;
Figs 31A and 31B are views similar to Figs 30A and 30B with the latch in a latched position;
Fig 32 is a perspective view of the removable carrier assembly with removable sleeves;
Fig 33 is a plot of data showing capture of virus from an aerosol utilizing removable electrodes
Fig 34 is a perspective view of an alternative carrier;
Fig. 35 is a perspective view of a latch with planar electrodes; and
Fig 36 is a perspective view of an alternative carrier assembly.

### DETAILED DESCRIPTION OF THE INVENTION

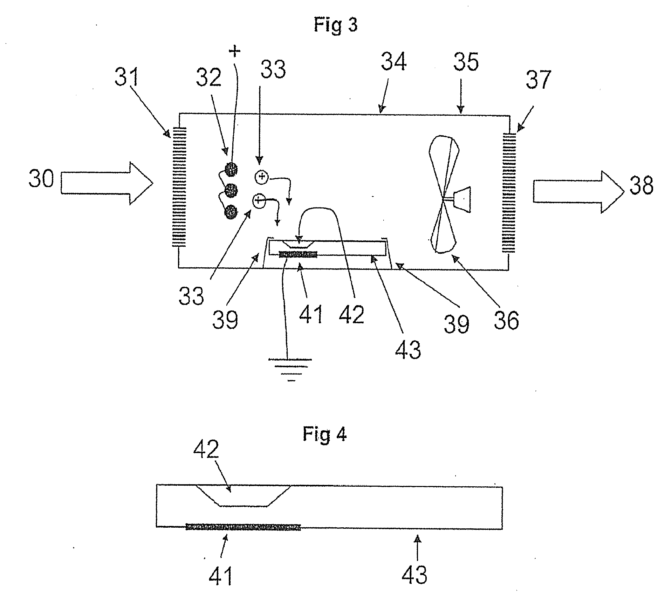

In its simplest embodiment, the present invention comprises a series of wires held at high voltage in a flowing stream of air generated by a fan-like device and a collection means of the assay device exposed to the stream, and having an electrode juxtaposed so as to attract charged particles from the flowing stream. The juxtaposed electrode creates a potential well that will cause the charged particles to be electrostatically precipitated on a collection area of the assay device. Thus, Fig 3. illustrates a device not forming part of the present invention in detail. The device comprises a non-conductive housing 35, an entrance grill 31 and exit grill 37. A pumping device, such as a fan 36, directs and pulls through a flowing airstream entering at 30 and exiting at 38. Wire electrodes 32, seen in cross-section in Fig 3, are held at high voltage, in the range of kilovolts, and plasma generation results in charged particles 33 which are attracted out of the flowing airstream via a potential well on to a capture means 42 of the assay device 43. Assay device 43 incorporates an electrode 41 which is shown to be grounded with the common electrical symbol for grounding. The assay device 43 is removably supported and clamped in an indented aperture 39 in the housing 35. For clarity, the assay device 43 is separately illustrated in Fig 4. Thus, to perform an assay, the assay device is clamped in aperture 39 in the housing 35 of an electrokinetic device not forming part of the present invention, exposed to a predetermined voltage, flow rate and time, then removed.

One form of assay would be a lateral flow immunochromatographic device, in which case the assay is initiated by application of a suitable chromatographic transport facilitating fluid to the sample well 42 and reading the result after a predetermined time. Numerous other simple assay systems can also be used, involving optical or electrochemical detection and determination of the presence or absence or amount of the agent to be assayed. An alternative to the lateral flow device would be an enzyme immunoassay, where the presence or amount of the substance to be detected is determined from application of a chromogenic substrate to an enzyme bound in immunocomplex, and determination of the subsequent color reaction. Since the device of the present invention performs in a dielectric medium, conductive aqueous fluids would normally need to be added to the various assay types to initiate a detection reaction.

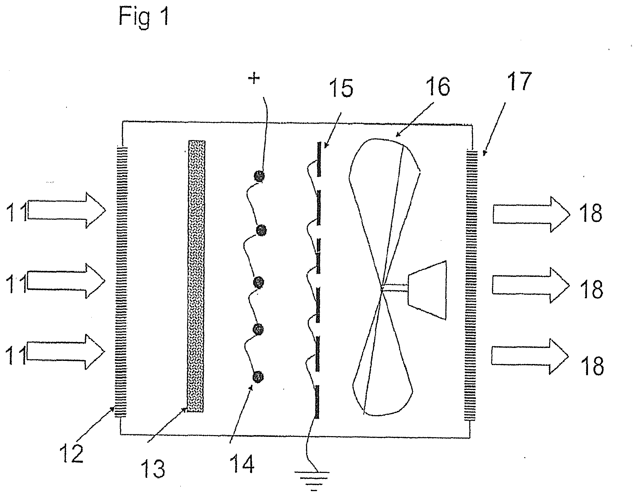

The understanding of the present invention is facilitated by the illustrations of prior art devices. Further, because the present invention can be fabricated by simple modifications of prior art devices, figures including drawings of several prior art devices have been included. Fig 1 has been derived from various technical specifications of HVAC systems for domestic housing. Air flow is driven by a fan 16, provide inlet flow 11 and outlet flow 18, entering via a grill 12, a coarse pre-filter 13 and the high voltage wire electrodes, grounded electrodes 15, upon which charged particles are electrostatically precipitated, and exit grill 17. Prefilters are not normally required in the function of the present invention.

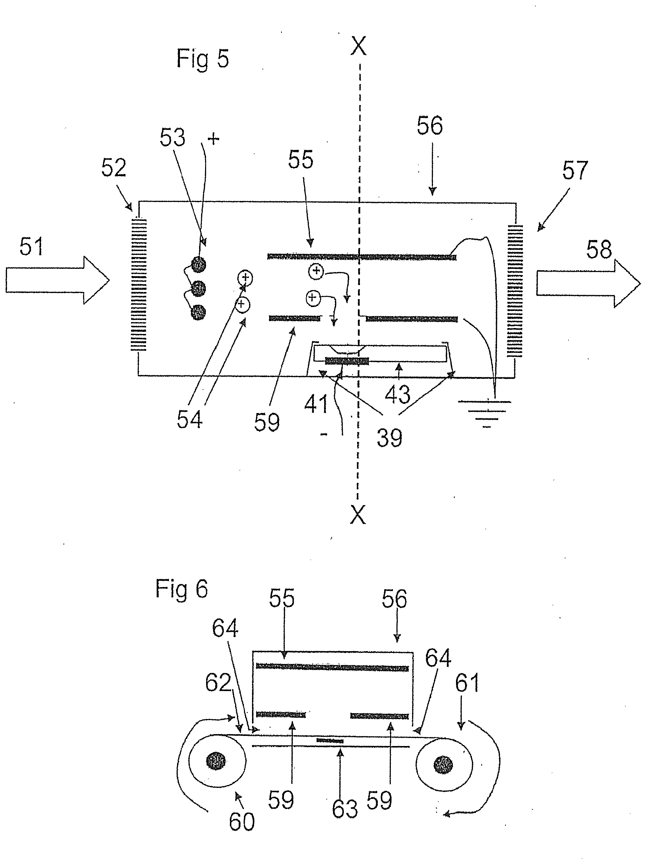

In a further example not forming part of the present invention, Fig 5 shows a device with the flow of the dielectric fluid propelled by electrokinetic means. The device consists of a non-conductive housing 56, and entrance grills and exits grills 52 and 57, respectively, for the inflowing and outflowing dielectric fluid, 51 and 58, respectively. Wires 53, seen in cross section in Fig 5, are maintained at a positive high voltage, and electrokinetic flow is directed by grounded planar electrodes 55 and 59. An aperture exists in the electrode 59, below which is located a collection means and assay device, removably supported in clamps 39 in the housing 56. As in Fig 4, the collection means incorporates an electrode 41 which is small in dimensions compared with the grounded planar electrodes 59. The electrode 41 in this case is held at a high negative voltage in the kilovolt range. The planar electrodes 55 and 59 cause the charged particles 54 to be first transported with the net fluid flow, but when they reach the potential well created by the negative electrode 41, they are diverted from the stream on to the collection area of the collection means 43. Thus, to perform an assay, the assay device is placed in a suitable aperture 39 in the housing 56 of the electrokinetic device of the present invention, exposed to predetermined voltages of the wires 53 and the electrode 41 and predetermined time, then removed. One form of assay would be a lateral flow immunochromatographic device, in which case the assay is initiated by application of a suitable chromatographic transport facilitating fluid to the sample well 42 and reading the result after a predetermined time. Numerous other simple assay systems can also be used, involving optical or electrochemical detection and determination of the agent to be assayed. Since the device of the present invention performs in a dielectric medium, conductive aqueous fluids would normally need to be added to the various assay types to initiate a detection reaction.

In another example not forming part of the present invention, an alternative means of sample collection may be used to create a continuous record of the agent to be analyzed. Fig 6 illustrates such an example. The device of Fig 6 is comparable to the device of Fig 5 in all respects except for the omission of the assay device and replacement by a reel-to-reel sample collection means. The reel to reel device supports and moves the sample collection means orthogonally to the net flow of the dielectric fluid. Accordingly, the illustration of Fig 6 represents a section X....X through the device of Fig 5. The reels 61 and 62 rotate in the directions indicated by arrows, transporting the sample collection means, 62, through slots 64 in the housing 56. An electrode 63, mounted in the housing, is held at a negative voltage in the kilovolt range. Similarly to Fig 5, charged particles will be swept out of the flowing stream by the potential well created by electrode 53, and deposited on the sample collection means 62. Thus, to perform an assay, the wire electrode 53 and the electrode 63, whose area is small compared with the grounded planar electrodes 59, are set at predetermined voltages and the reel-to-reel transport device moves the sample collection means for a predetermined time. The sample collection device material may include a passive fibrous or membranous material, or an activated material that will capture the sample in place until the time of assay; or may be a structured material such as micro-pillar type, and may have embedded capture molecules, such as provide ligand-anti-ligand reactions. Upon completion of the predetermined time, the take-up reel 61 is removed and subject to hydration prior to assay, in such a way that the captured agent to be analyzed remains positioned on the capture means, either by active or passive immobilization, or by capture via a ligand-anti-ligand interaction. The assay is performed and the disposition of values along the length of the capture means provides a time record of the presence or amount of the agent measured. The continuous record may be colorimetric, in which case the record is a visual display of the presence or amount of the agent as a function of time. The continuous record may also be digital, in which the record can be presented as a graphic representation of the amount or presence of the agent as a function of time.

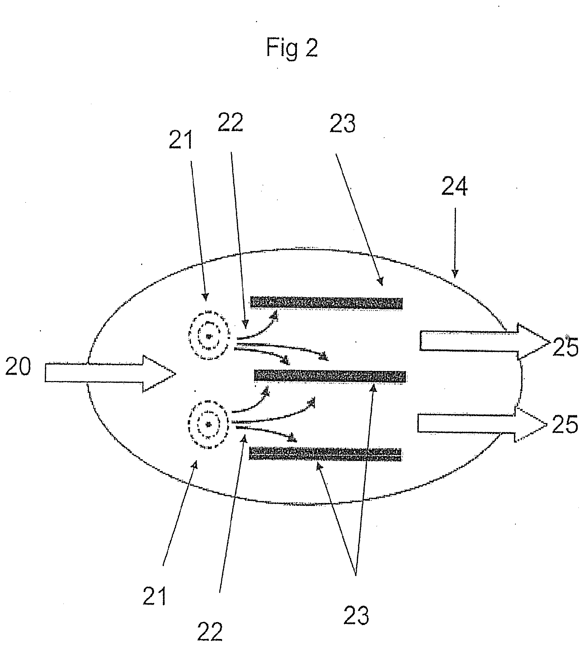

Fig 2 is reproduced from the publication of Custis et al (2003). The prior art device of Fig 2 comprises a housing 24, electrokinetically driven air flow entering at 20 and exiting at 25, wire electrodes 21, and planar electrodes 23. Conjectural lines of constant voltage (voltage contours) are shown as broken circles surrounding the electrodes 21, and conjectural particle movement in the airstream by arrows 22. This illustrates the particles impinging on and being electrostatically precipitated on the planar electrodes, 23, which are removable. Samples for analysis are collected by wiping from the planar electrodes with tissue, extraction and application of the extract to an immunoassay, according to the procedure of Custis et al. The advantage of the present invention is that such separate wiping and extraction steps are not required. Further, while the contour lines of equal voltage in the prior art of Custis et al are conjectural, computer simulations are available which facilitate the design of the devices of the current invention without undue experimentation. Brown in Fig 2 of US patent 2,949,550 also drew conjectural lines of voltage gradient. The voltage gradient will determine the force and direction experienced by a charged particle. Voltage gradients can be rigorously determined by computer simulation, eliminating undue experimentation.

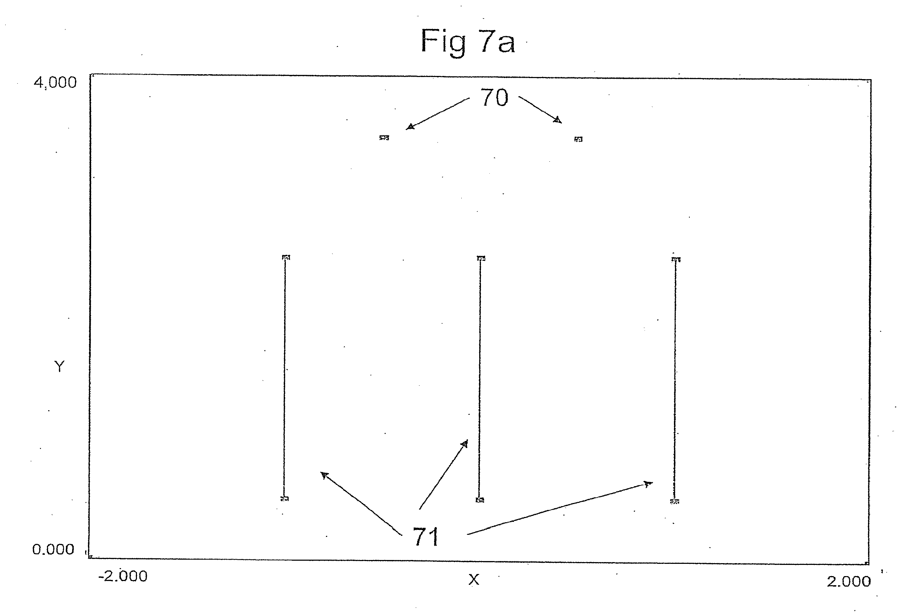

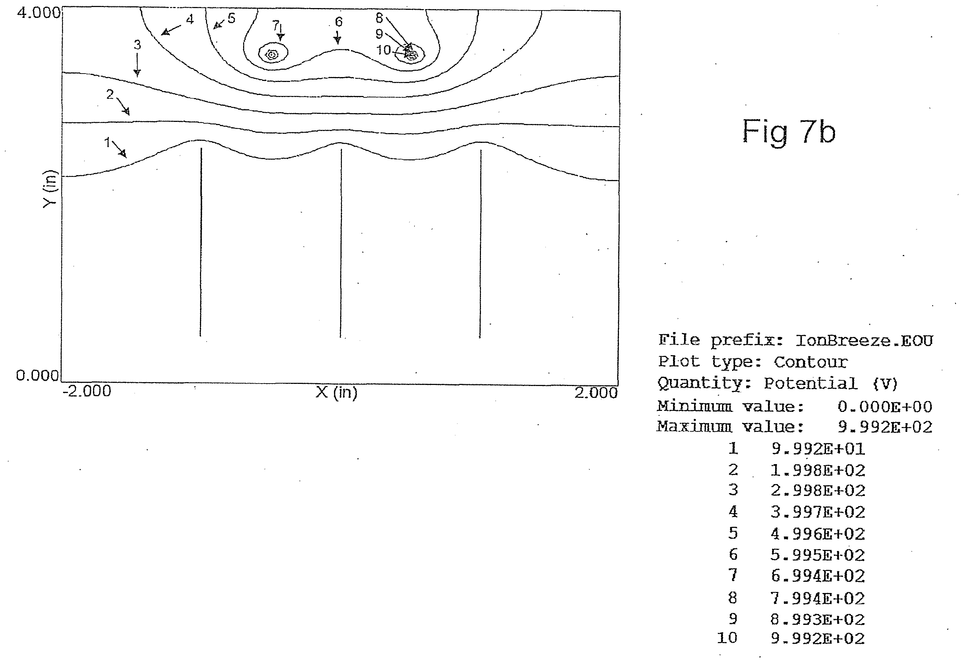

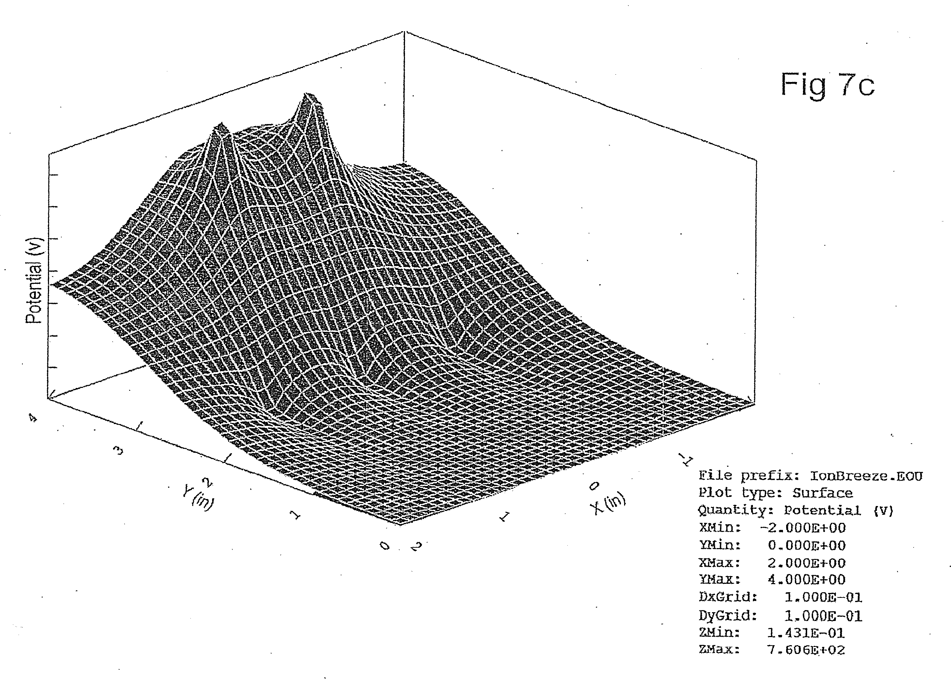

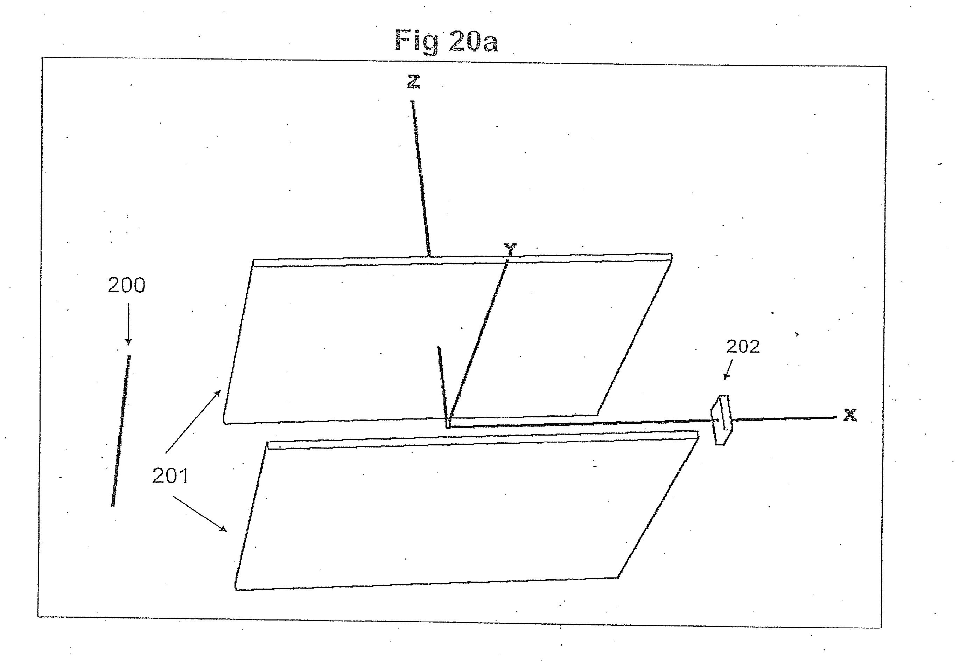

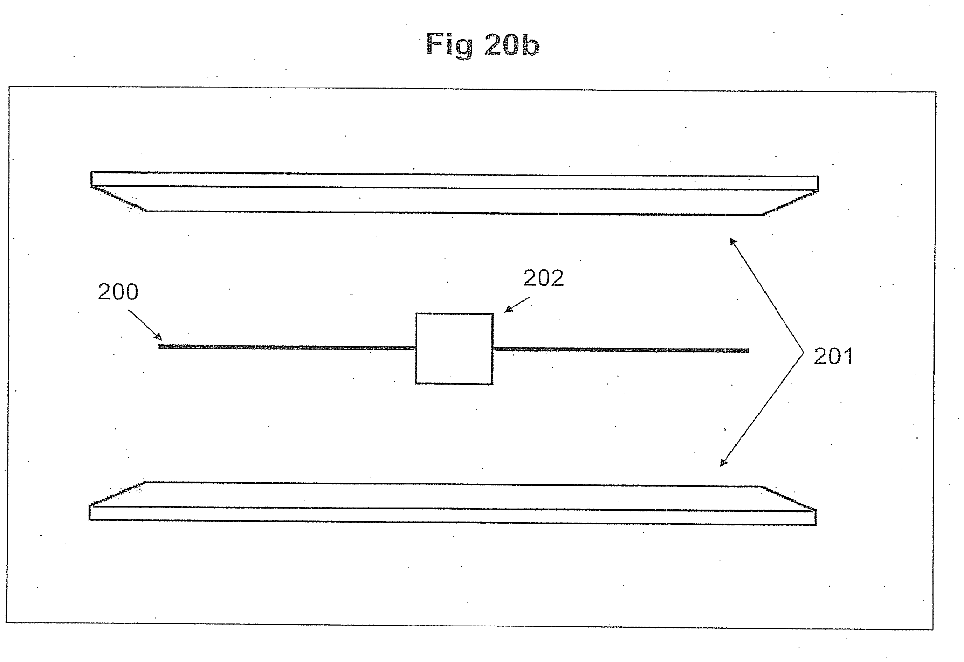

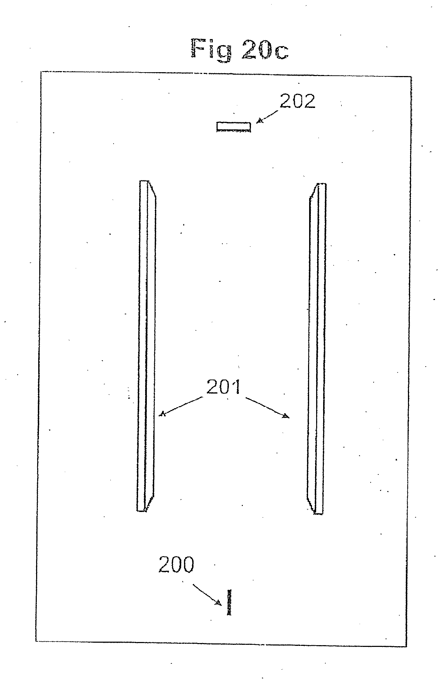

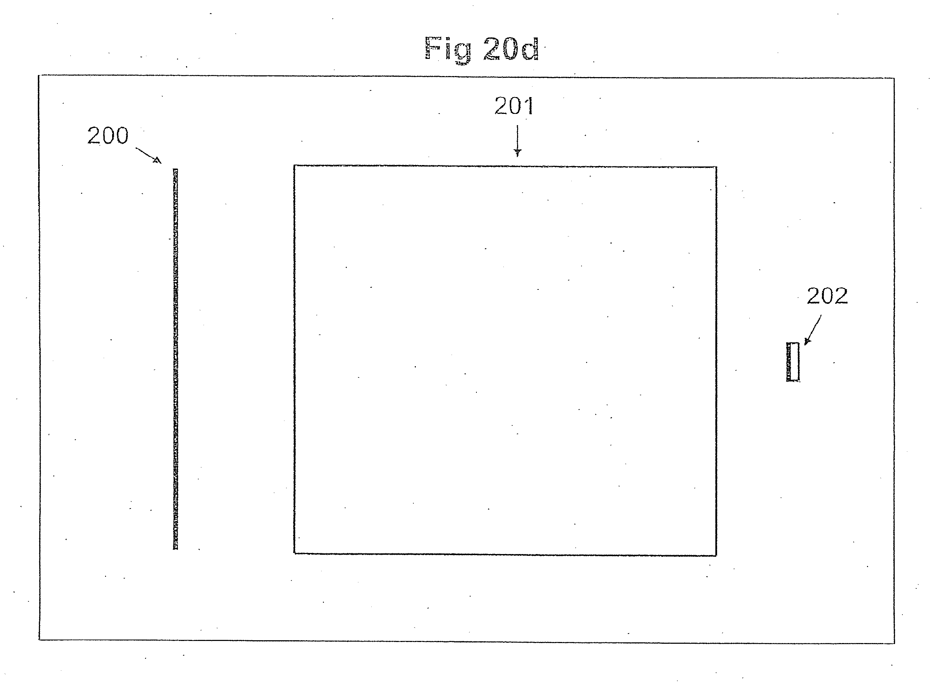

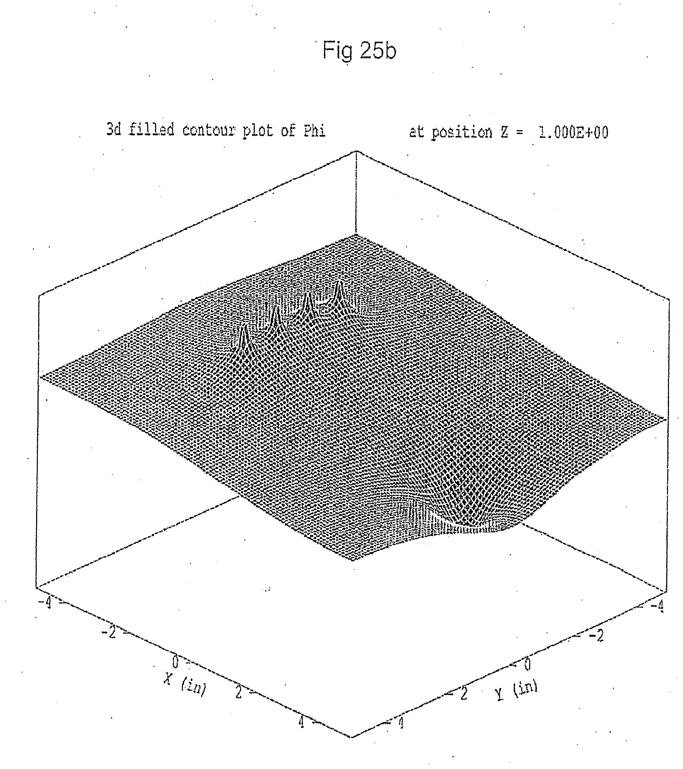

The computer simulation of the devices of the present invention are performed with the use of a software package provided by the company Field Precision LLC, PO Box 13595, Albuquerque, NM 87192, U.S.A. This software provided by Field Precisions LLC utilizes finite element analysis based on Coulomb's Law and Gauss's Law. The work is described in "Field Solutions on Computers" (ISBN 0-8493-1668-5); author Stanley Humphries, published by CRC press. Description of the software and the conditions for purchase are provided by Field Precisions LLC. The version used here is the free student's version, comprising the program *Mesh6.5* to design devices and *EStat 6.0* to generate the output. The drawings of Fig 7a, b, and c to Fig 19 a, b and c are generated with this software package. Figs 20a, b, c and d to 25a and b are generated with the more advanced 3-dimensional programs, Geometer, Metamesh, HiPhi and PhiView. U.S. EPA/OAR/ORIA/Indoor Environments Division (MC-6609J) EPA 402-F-08-004, May 2008

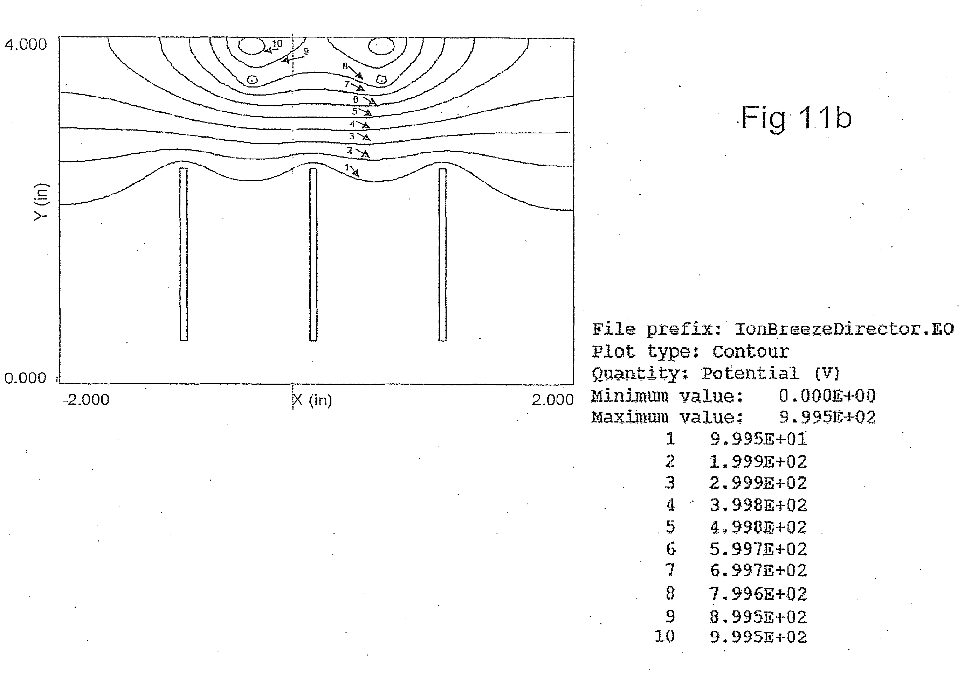

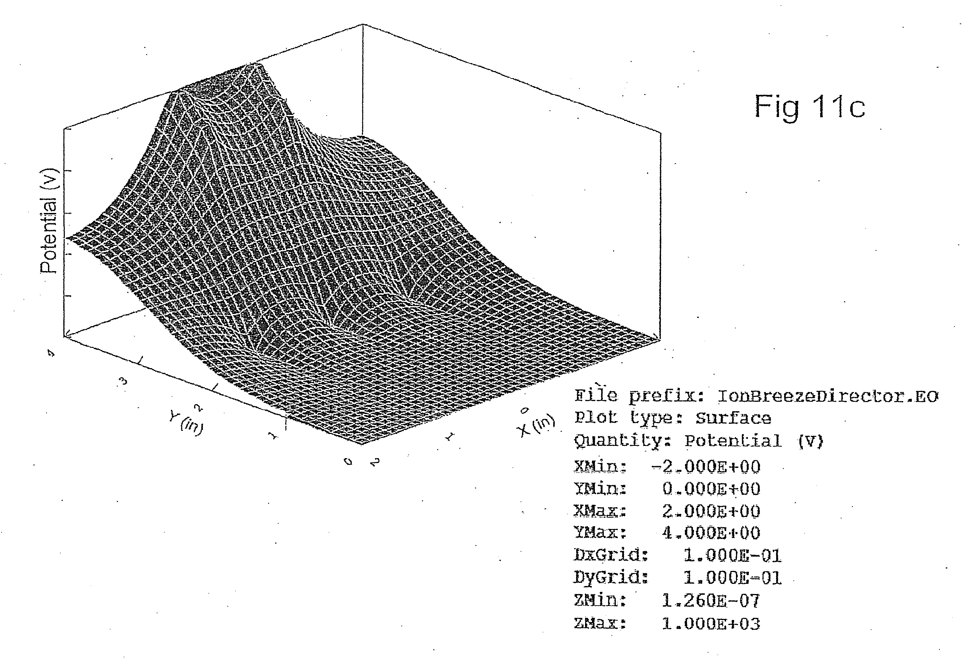

For further illustration of the use of the computer simulation, and to demonstrate how the present invention differs from the prior art, representations of prior art devices and arrangements are shown in Fig 7a, b and c to Fig 11a, b and c. For better understanding of the application of the software package, a detailed description of the process is given for Fig 7a, b and c. A representation of the lonic Breeze configuration (Fig 2) is created in the *Mesh* program in Fig 7a. A bounding box of 4 units X 4 units is defined, and within this box are placed two points, 70, which represent the wire electrodes, and three lines, 71, which represent the planar electrodes. The symmetry is defined as planar. This determines that all cross sections are equivalent extending in the third dimension out of the plane. This version of the software performs the computation in two dimensions, thus simplifying the calculations. The Mesh program saves the file in a CAD format (suffix .DXF) and also converts to a script which is recognized by the EStat program (suffix .MOU). The EStat then provides for the addition of dimensions (units=inches), material properties such as dielectric constants (1 for air), and voltages (1000 for wire electrodes, 0 for planar electrodes). With these parameters, a new file (suffix .EIN) is created. The mathematical solution of the simulation is then performed on the .EIN file, creating a file with the solution (suffix .EOU). Various graphical representations of the solution of the .EOU file are then available. Fig 7b shows the contour plot output, with contour lines, lines of equal voltage, given a numerical value label according to the voltage. Fig 7c shows the surface plot format. Here perspective drawing is used to express the voltage as a height in the third dimension. The surface plot representation is particularly useful as the steepness and direction of the slope in the surface represents voltage gradient and direction. Thus, the surface plot represents the force and direction vector to which a charged particle is subject. It is immediately apparent from Fig 7c that charged particles generated at the wire electrodes, or pre-existing in the air, will be propelled down the gradient into the three valleys and directed on to the surfaces of the planar electrodes.

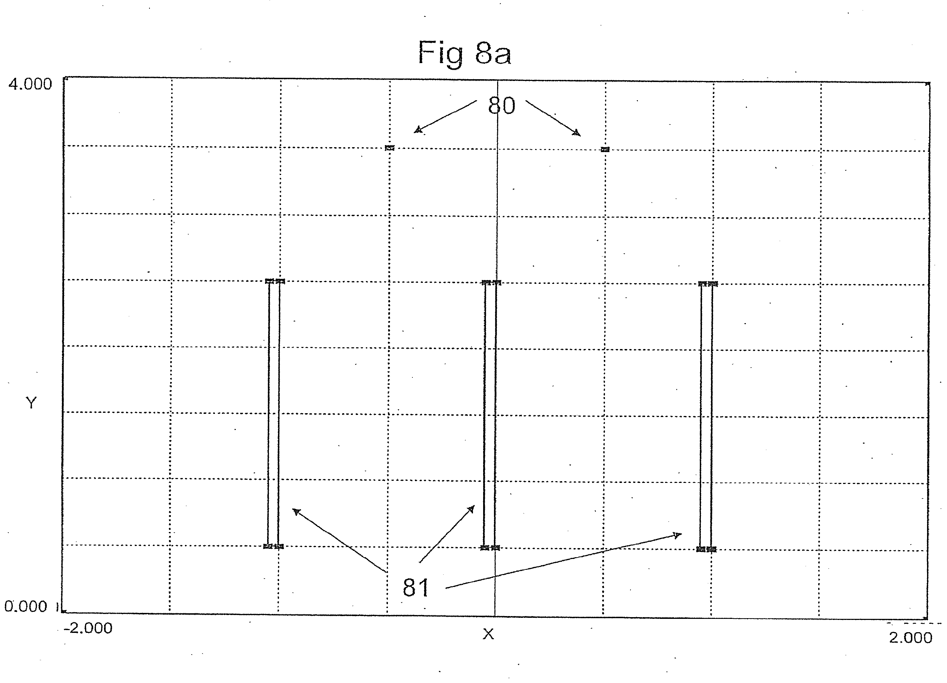

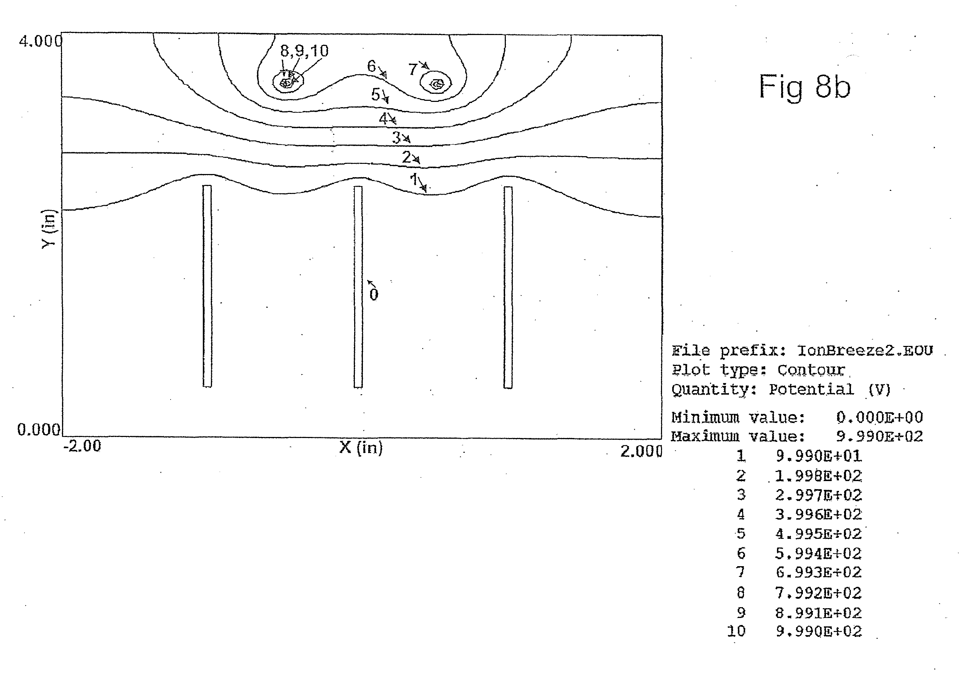

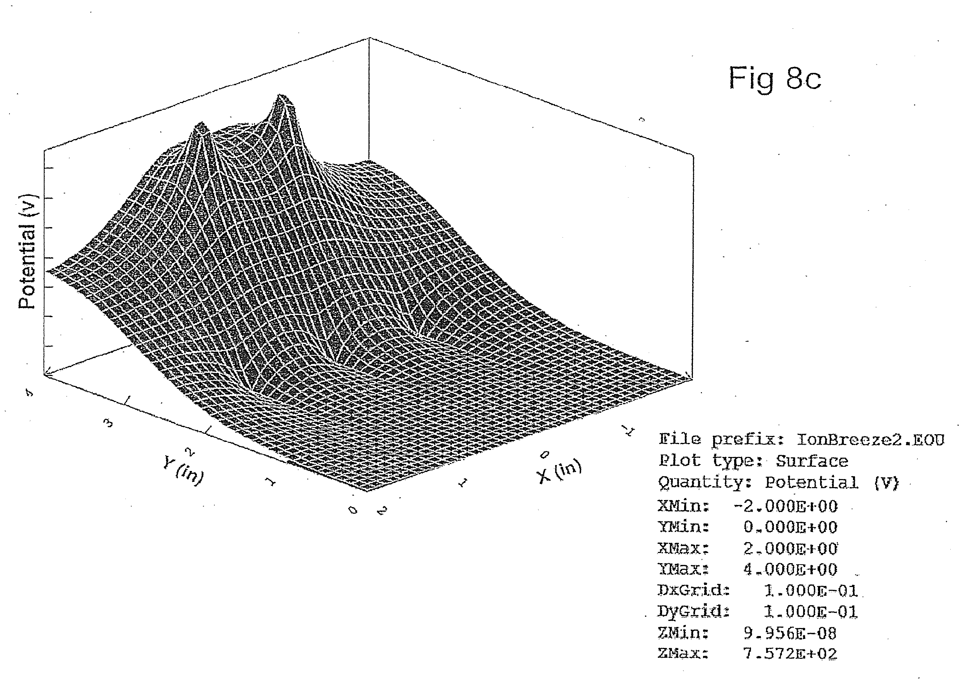

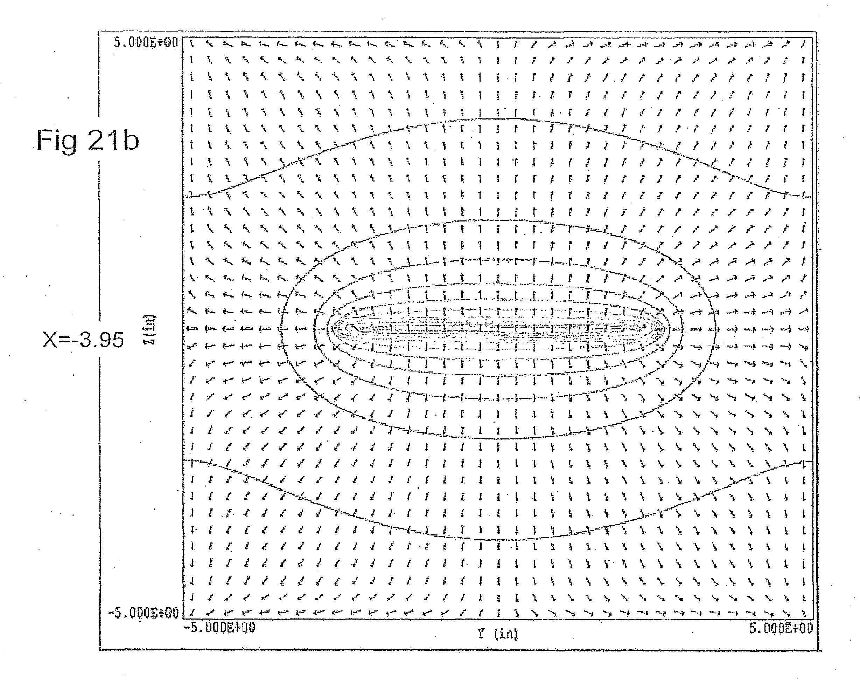

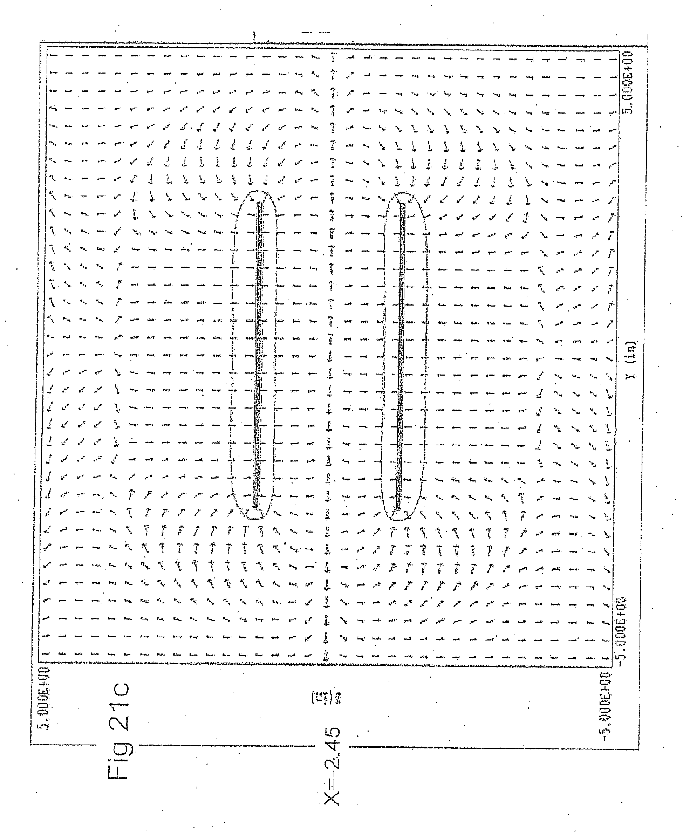

The various configurations in the remaining Fig 8a, b, and c to Fig 21a, b and c are all generated in this way.

For the establishment of design concepts for the present invention, the effect of the thickness of the planar electrodes is shown in Figs 8a, b and c. In Figs 7a, b and c the planar electrodes are represented as having zero thickness, whereas in Figs 8a, b and c they are represented as plates with a finite thickness of 1/20". In all other respects, these two sets of figures are identical. It can be readily seen that altering from an infinitely thin electrode to one that has finite and practical thickness has no impact on the resulting voltage gradients. The family of US patents 7,056,370, 7,097,695 and 7,311,762 teach the improvement of reduction of thickness of the electrodes over the prior art, US patent 4,789,801. However, further reduction of thickness has no benefit for the current invention.

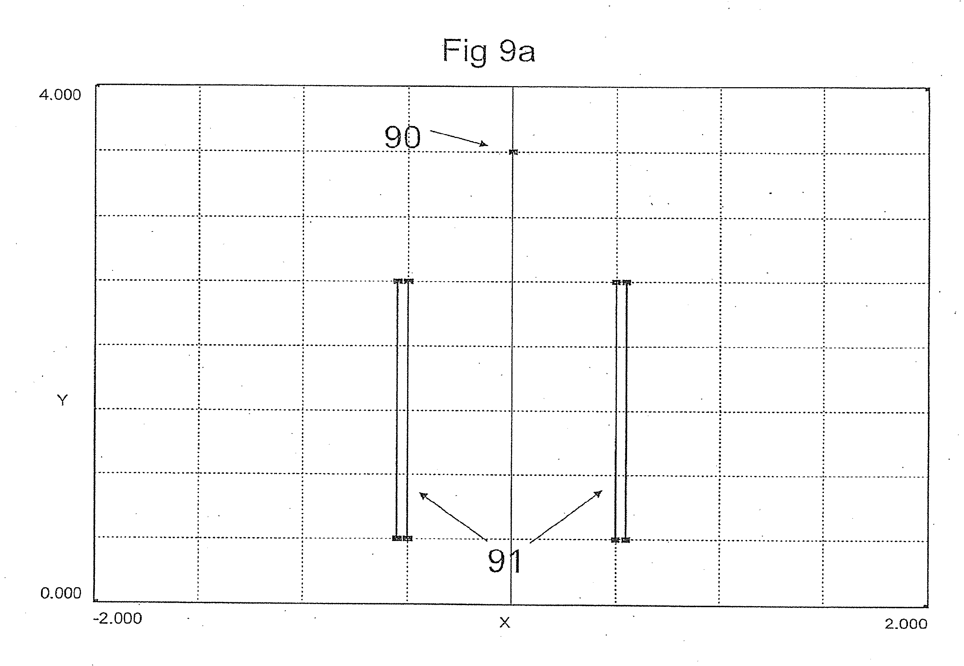

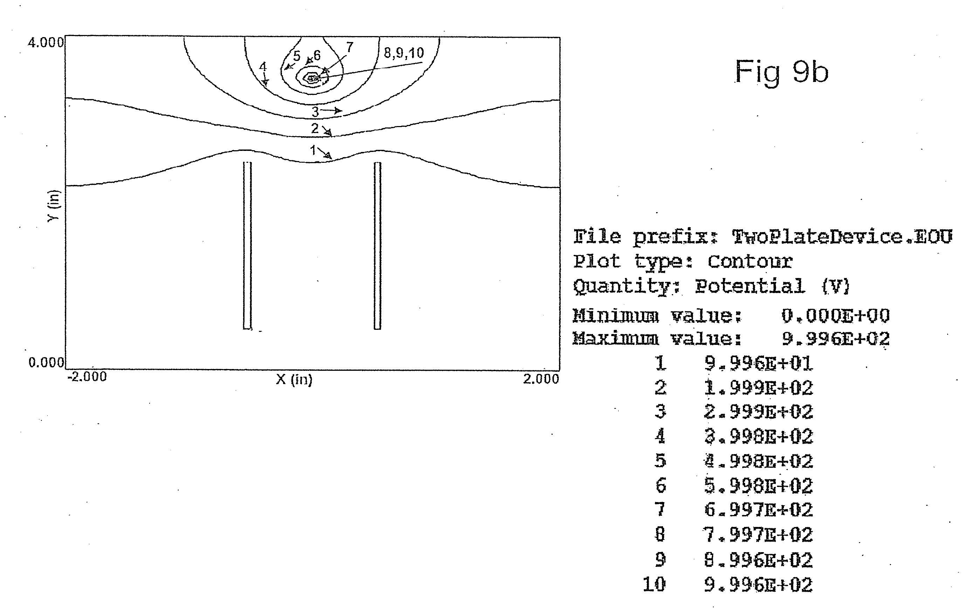

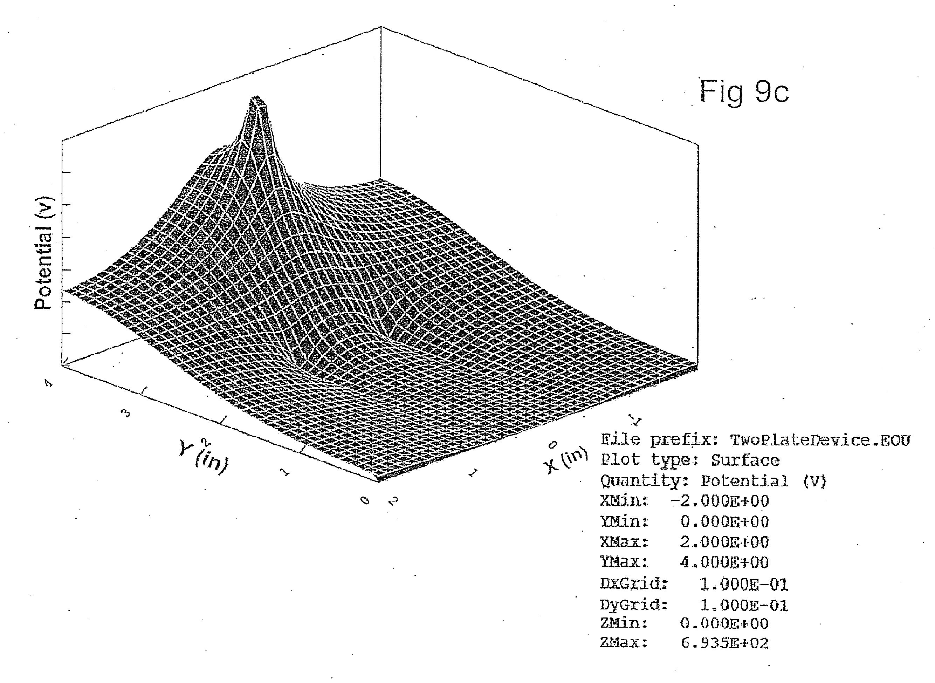

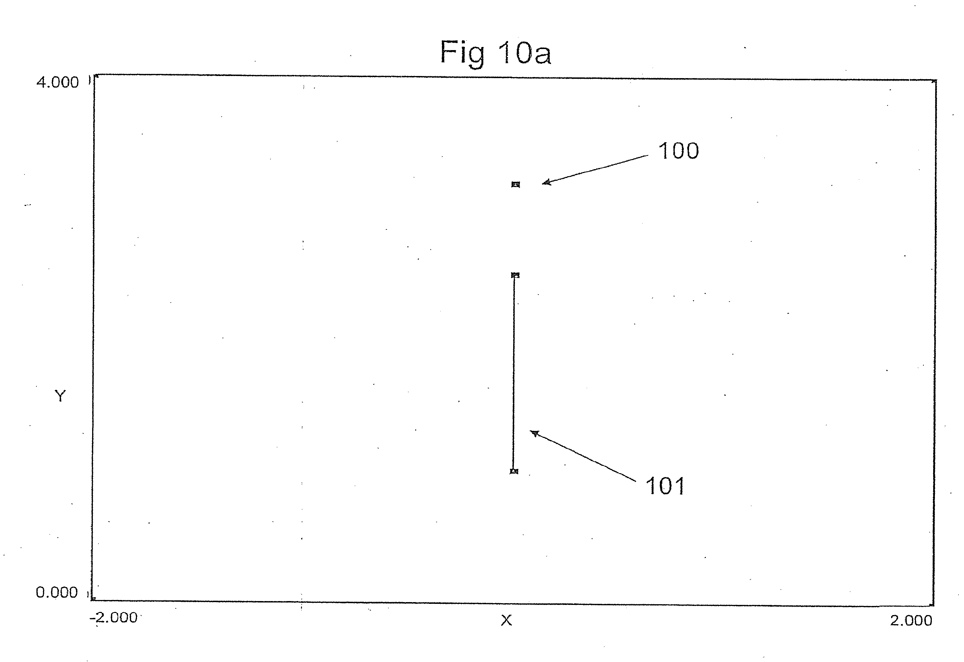

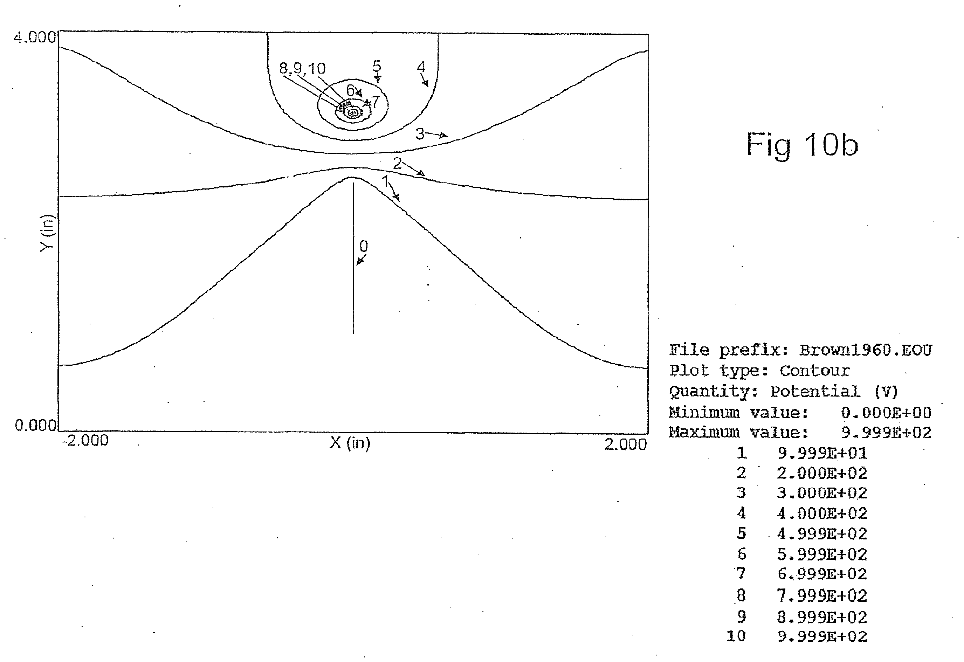

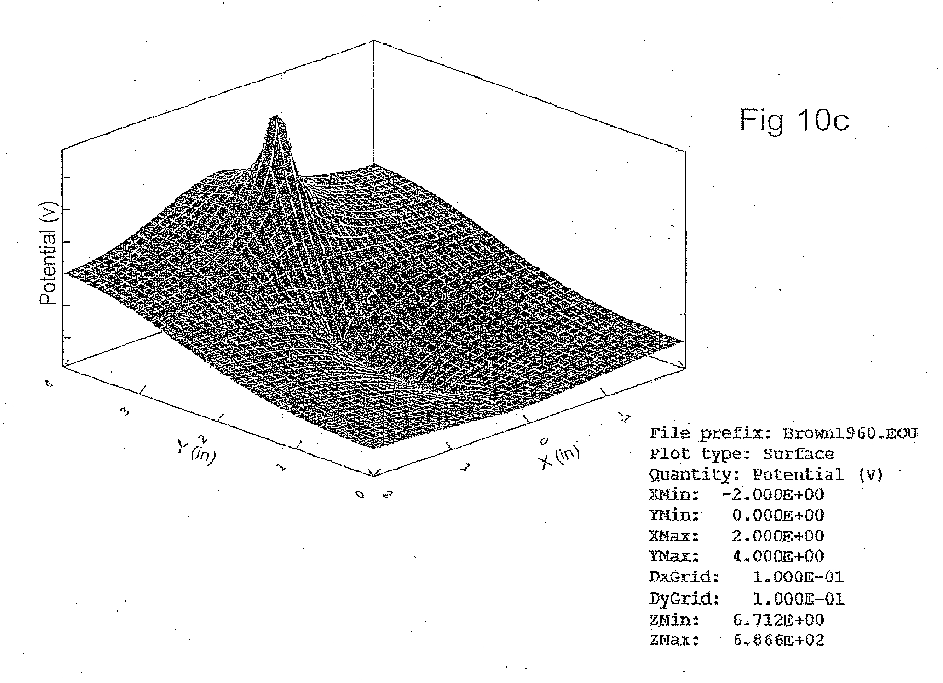

For the purposes of the present invention, a somewhat simpler arrangement of electrodes would be advantageous for facilitating the placement of a third electrode creating a potential well for the capture of the assayable agent on to the collection means of the assay device. Accordingly, the computer simulations in Figs 9a, b and c and 10a, b and c show the effect of successive reduction in the number of electrodes. Fig 9a shows one high voltage wire electrode 90 and two plate electrodes at 0 voltage, 91. The contour plot Fig 9b and the surface plot Fig 9c show charged particles generated as plasma at the wire electrode 90, or pre-existing in the air, will be propelled down the gradient into the two valleys and directed on to the surfaces of the planar electrodes. Similarly, Fig 10a shows a design with a single high voltage wire electrode, 100 and a single plate electrode at zero voltage, 101. The physical arrangement of Fig 10a corresponds to the original electrokinetic design of Brown in US patent 2,949,550. The contour plot Fig 10b and the surface plot Fig 10c show charged particles generated as plasma at the wire electrode 100, or pre-existing in the air, will be propelled down the gradient into the valleys and directed on to the surfaces of the planar electrode.

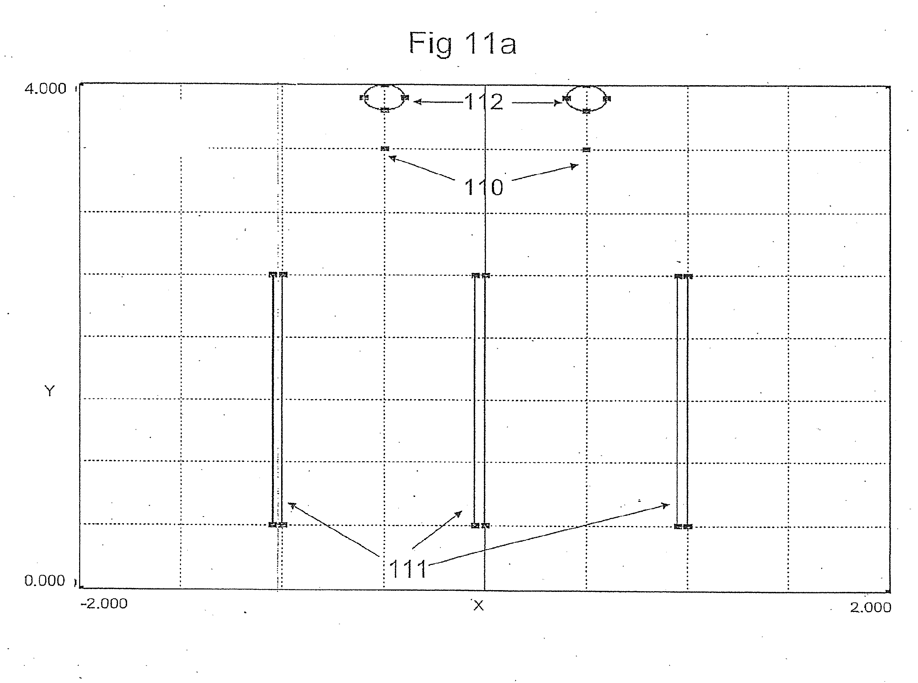

The design of Fig 11a is identical with the design of Fig 8a except for the addition of two rod electrodes, 112, of 0.2 inches diameter and disposed upstream of the wire electrodes 110 and the plate electrodes 111. The electrodes 112 are held at 1000 volts, as are the wire electrodes 110. The plots of figs 11b and 11c show that the steepness of the voltage gradient is compromised by the presence of the rod electrodes 112, and the generation of plasma and electrokinetic propulsion would be reduced, although charges particles would still be directed into the potential valleys adjacent to the planar electrodes 111. It is to be emphasized that no focusing effect, in the sense used in the current invention, is created. It is to be noted that Taylor and Lee in the US patent number 6,958,134, teach that the placement of upstream electrodes serves to assist in the control of the flow of ionized particle. Nowhere do Taylor and Lee teach the use of an electrode of small dimensions compared with the planar electrode as a means of creating a potential well to capture charged particles from a flowing fluid stream. Fig 11a, b and c shows that the focusing effect taught by Taylor and Lee is distinct from the focusing as used in the present invention, as will be made clear from the embodiments of the present invention, which follow.

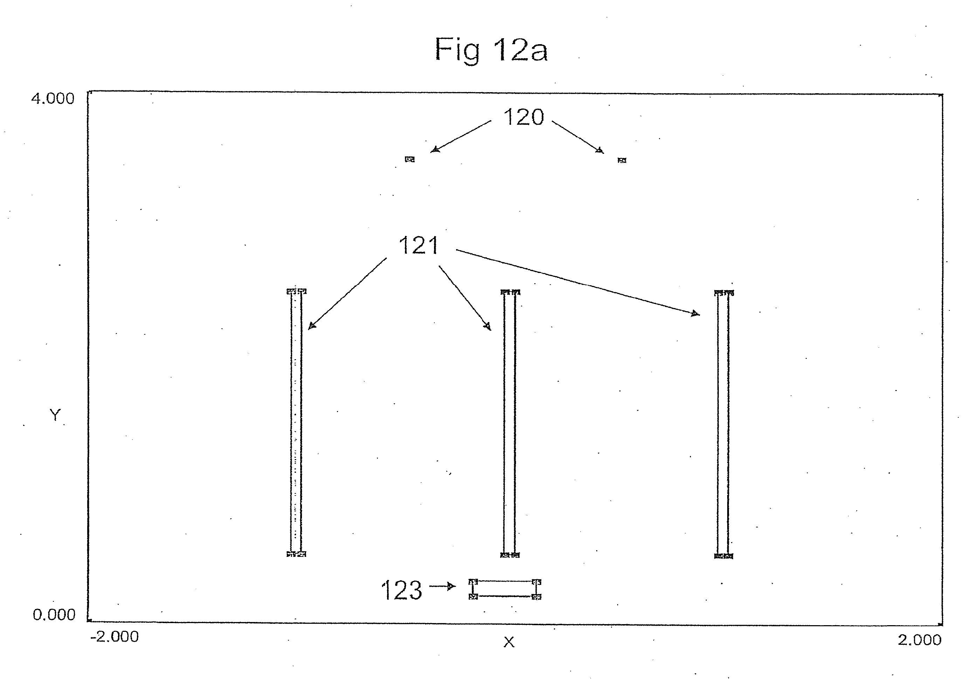

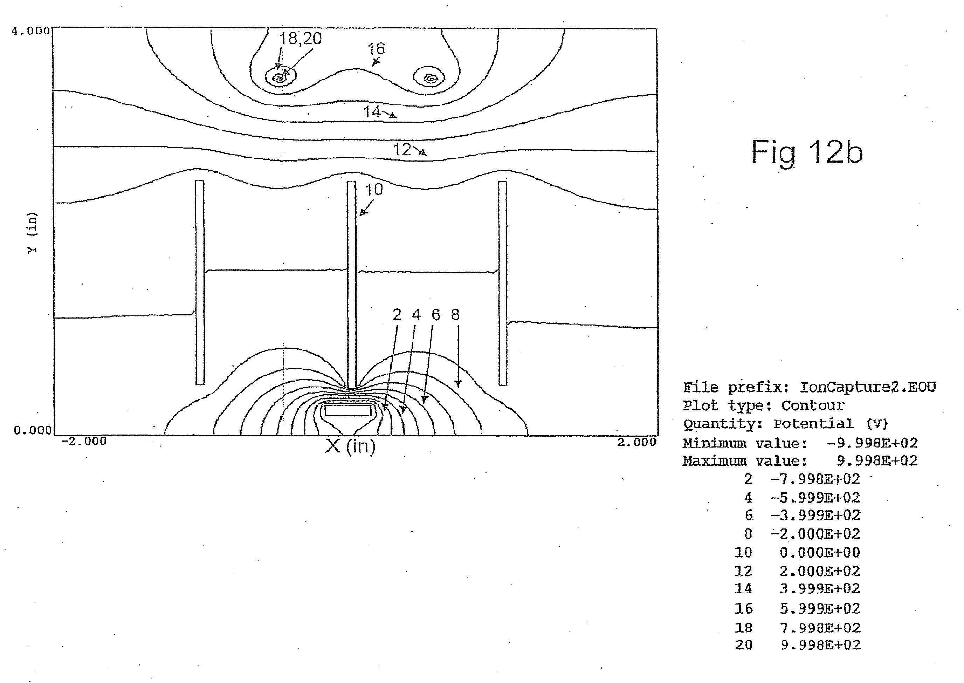

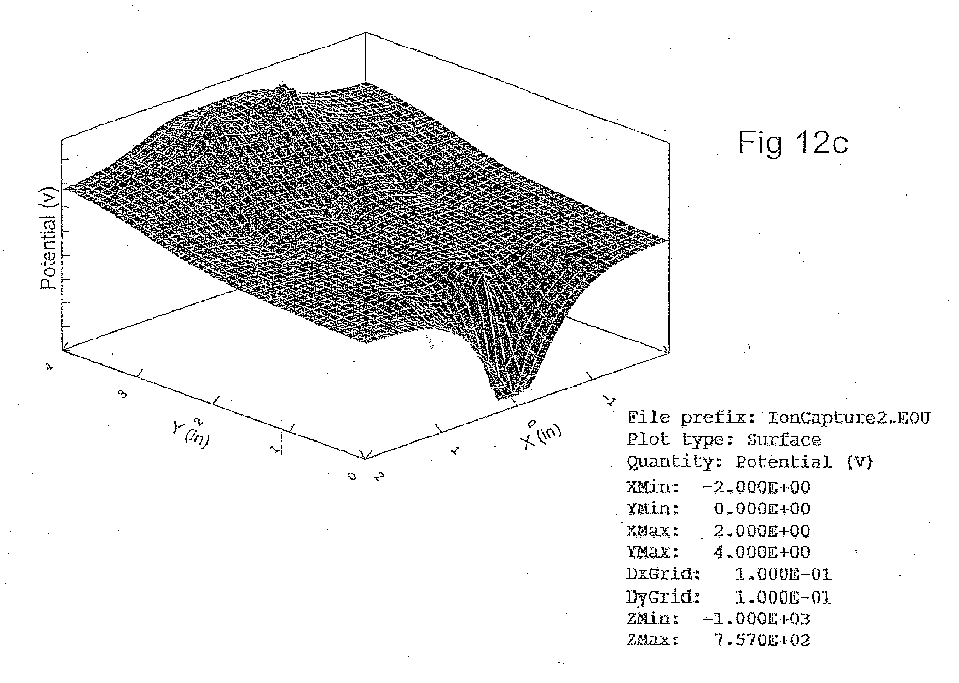

One embodiment of the present invention is shown in Fig 12a. This consists of two wire electrodes 120, three plate electrodes, 121 and a capture electrode, 123. This is comparable to the prior art device of Fig 7a, b and c, but with the addition of capture electrode 123, according to the present invention. Electrodes 120 are at 1000 volts, the plates 121 at 0 volts and the capture electrode 123 is at -1000 volts. The contour plot of Fig 12b and the surface plot of Fig 12c show that electrokinetically driven charged particles generated by the plasma at the wire electrodes 120 will be driven to the potential valleys in the neighborhood of the plate electrodes 121, but these valleys are downward sloping as is clear in the surface plot of Fig 12c. Consequently, the flow of charged particles will be propelled in the direction of the capture electrode 123, and eventually will be trapped in the potential well created by the capture electrode 123. Note that the downward slope of the valleys in the neighborhood of the planar electrodes 121 is less apparent in the contour plot Fig 12b than in the surface plot Fig 12c. This is because the plot interval is adjusted for clarity by the simulation program.

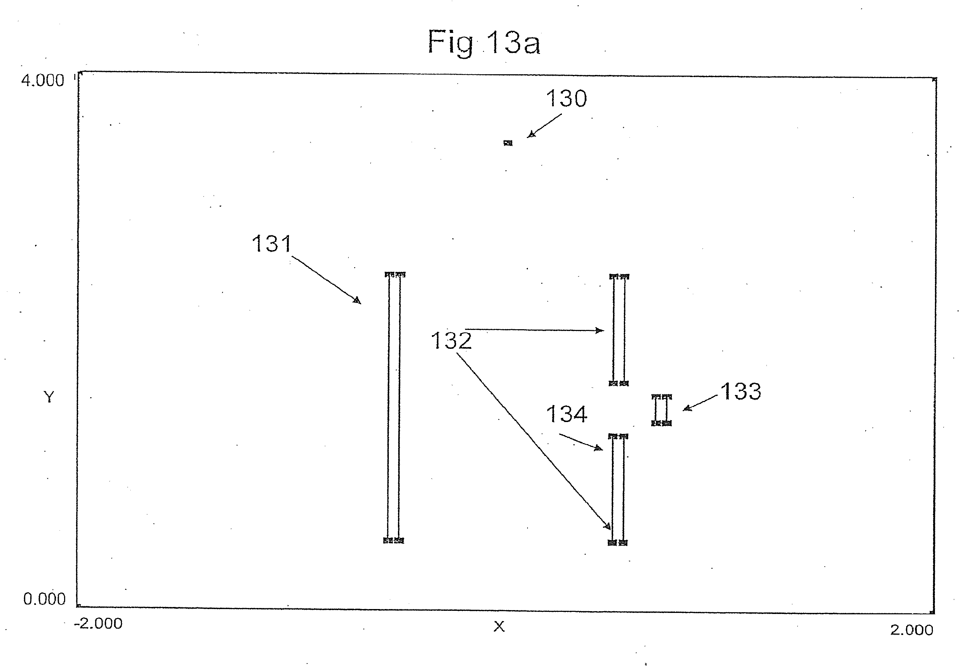

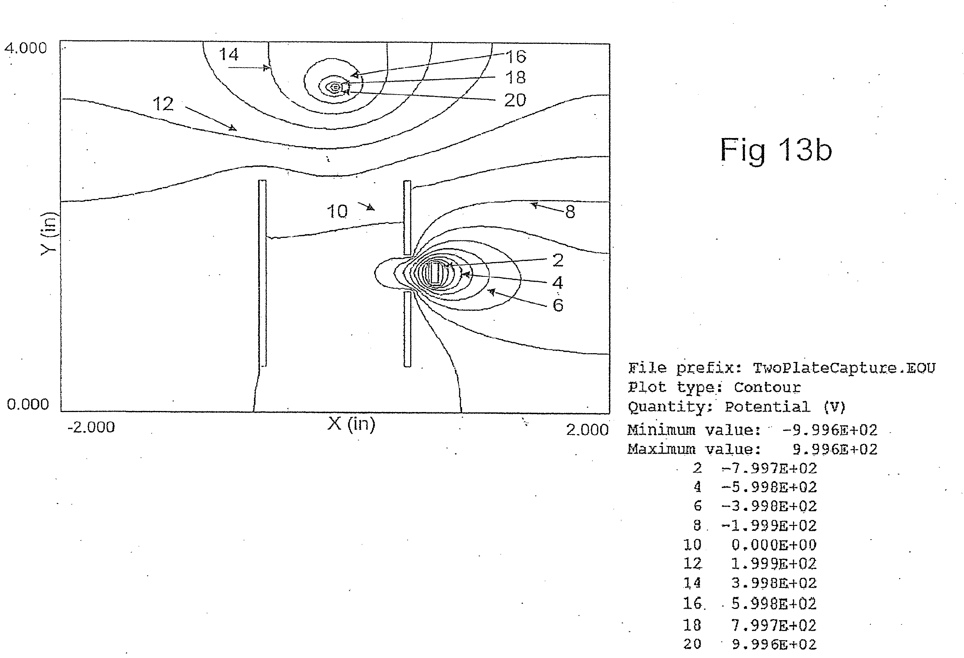

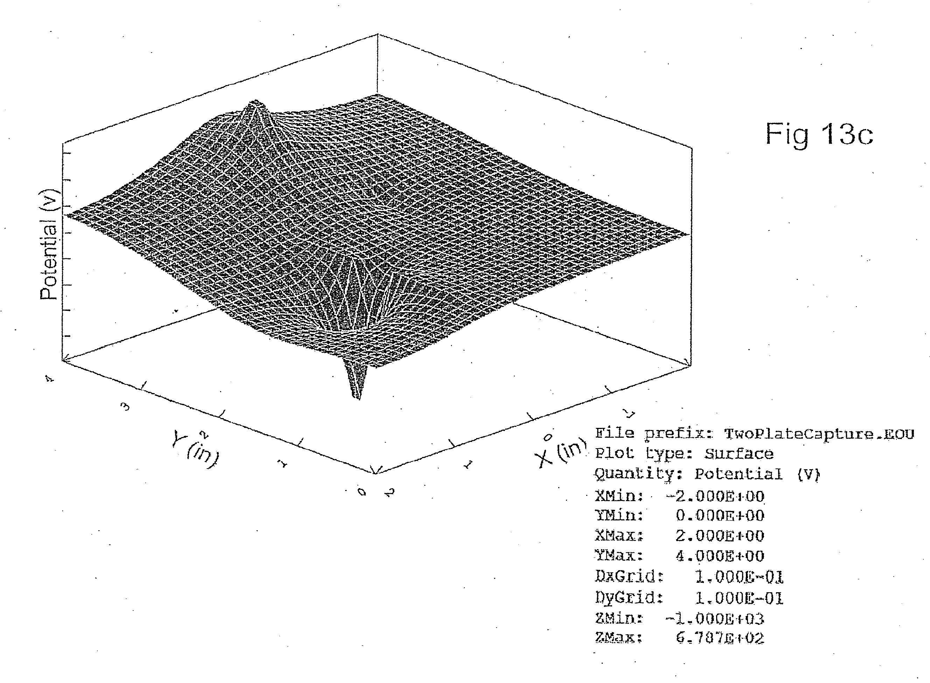

A more preferred embodiment of the current invention I illustrated in Fig 13a, b and c. The electrode arrangement is based on the prior art device of Figs 9a, b and c, with the following modifications according to the present invention. The electrode 132 is fabricated with a slot 134, and juxtaposed with dimensions comparable to the slot 134 is the capture electrode 133. See also the electrode arrangement of Fig 5. This arrangement of creating a potential well off-set laterally to the main electrokinetic fluid flow, may, in certain designs according to the present invention, be more convenient for the insertion of a capture means and assay device than directly in the fluid stream. In spite of this off-set arrangement, the contour plot of Fig 13b and the surface plot of Fig 13c show the flow of charged particles will be propelled in the direction of the capture electrode 133, and eventually will be trapped in the potential well created by the capture electrode 133.

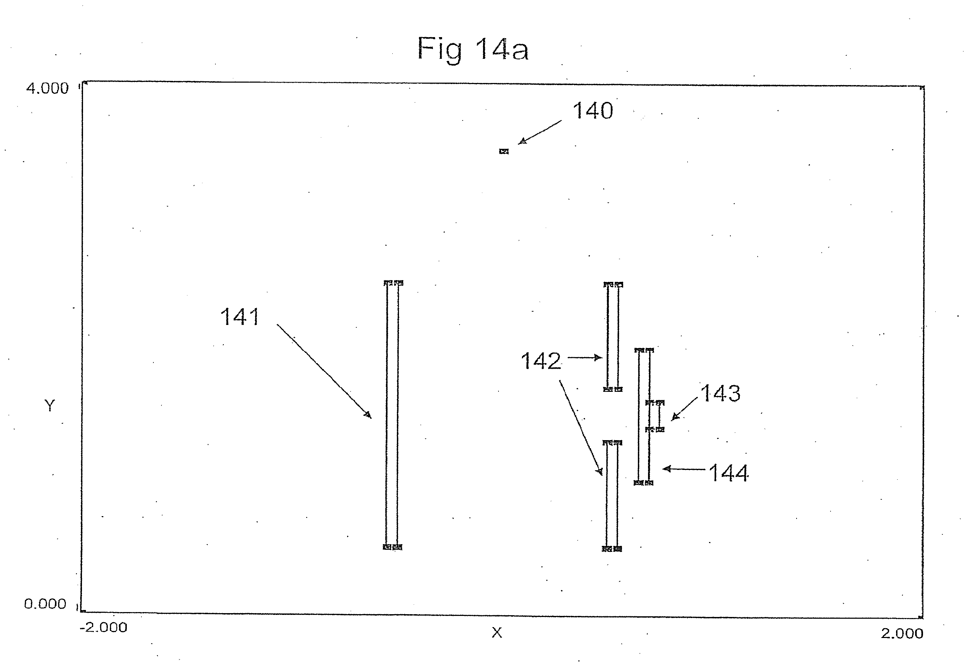

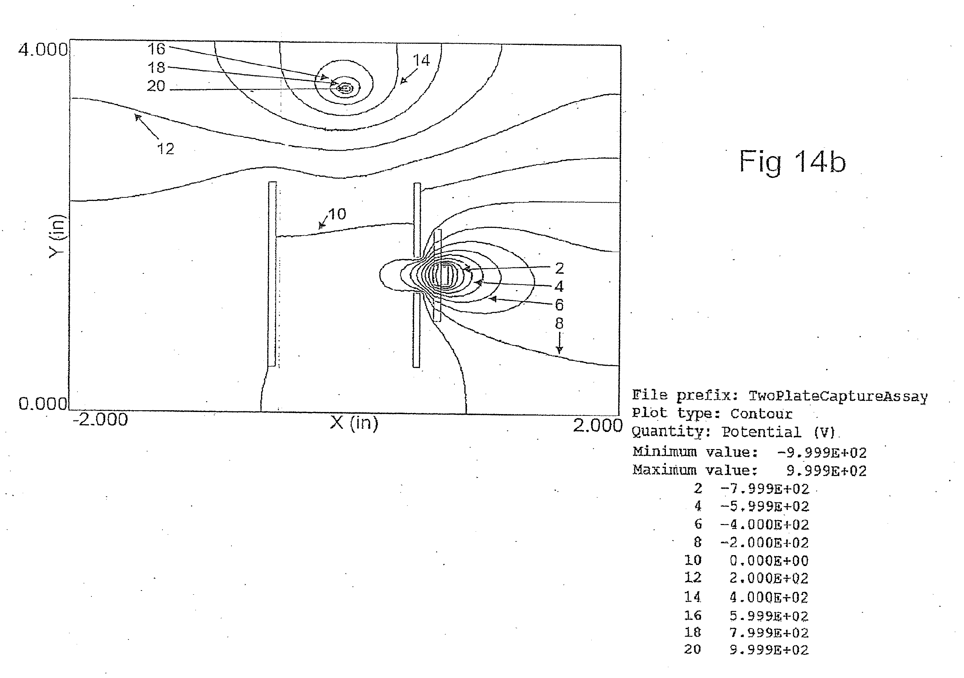

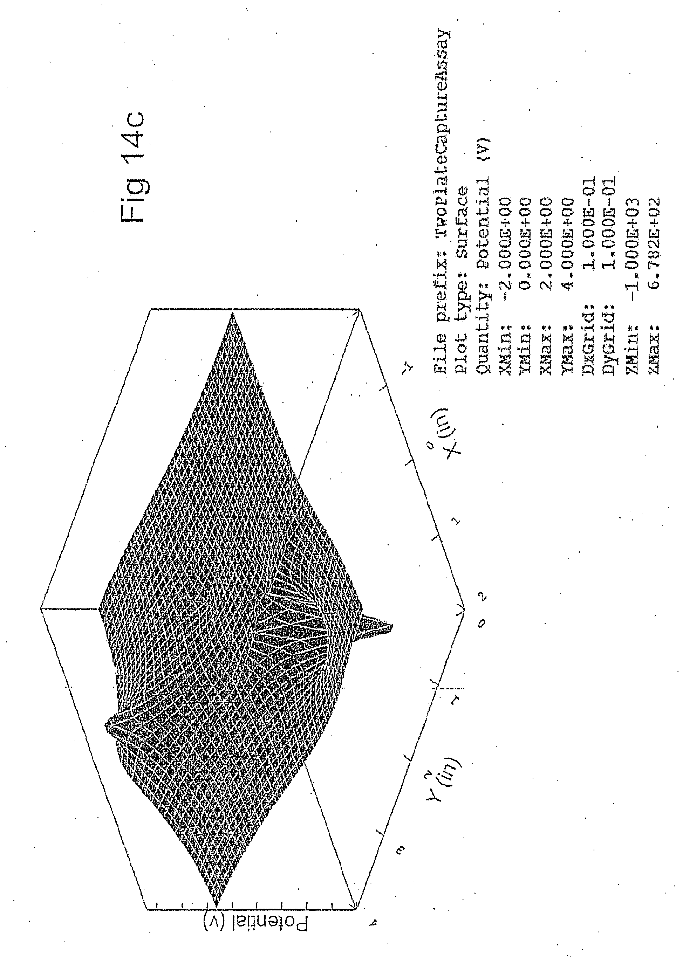

For simplicity and ease of understanding, no capture means or assay device was included in Figs 13a, b and c. In Figs 14a, b and c, a representation of a capture means and/or assay device, 144, is included. This is placed between the slotted plate electrode 142 and the capture electrode 143. A dielectric constant value of 2.0 for the capture means and/or assay device is input into the computer simulation. Reference values for typical dielectric constants may be obtained from Handbook of Chemistry and Physics, CRC Press, Boca Raton, Florida, 91st Edition, 2010, section 13. The value 2.0 is that for dry paper. Comparing Figs 13a, b and c with Figs 14a, b and c, the presence of paper as a capture means has no significant impact on the electric field distribution,

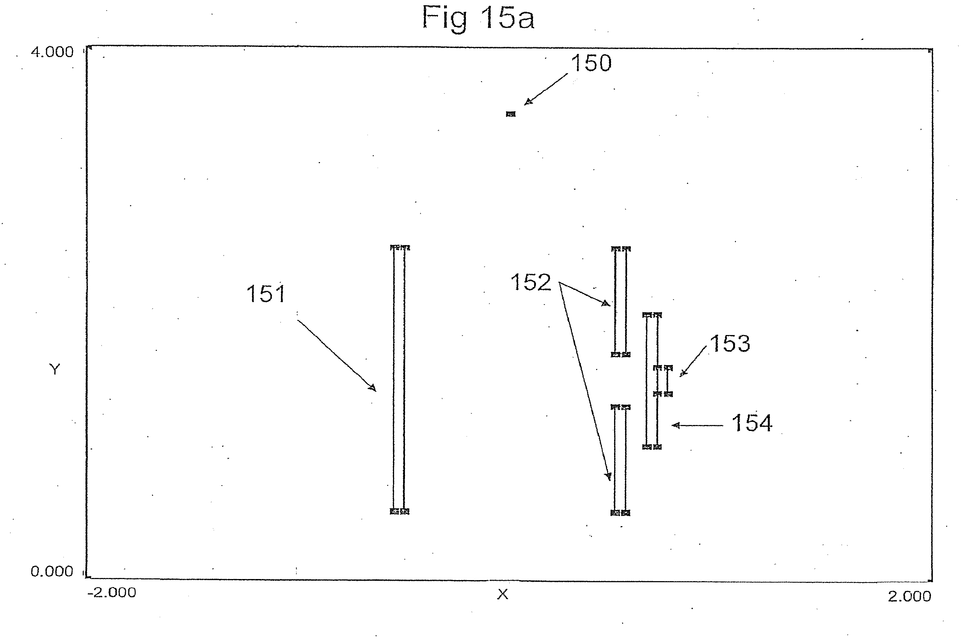

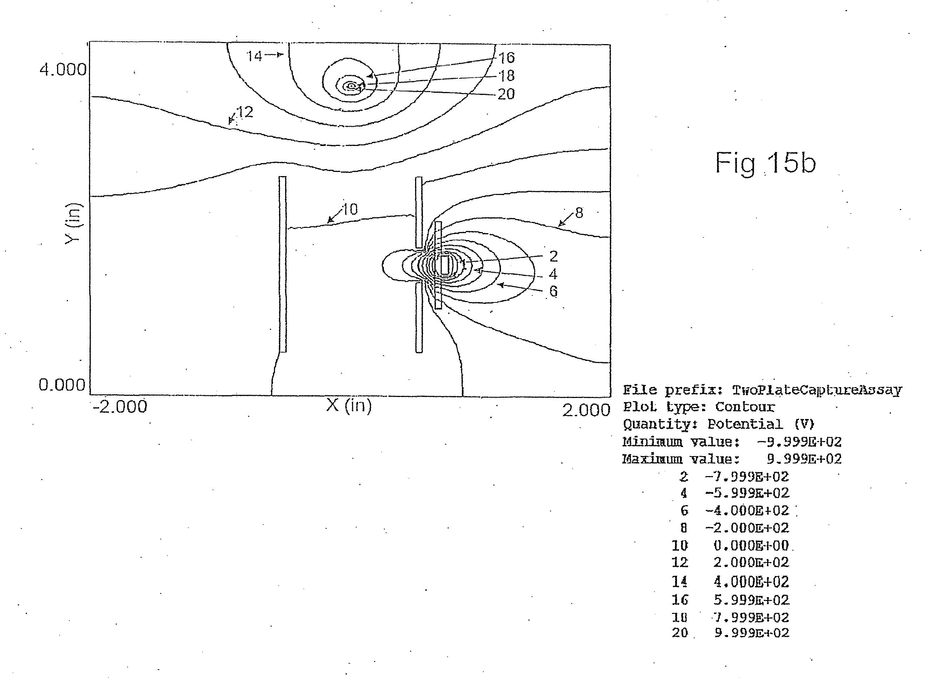

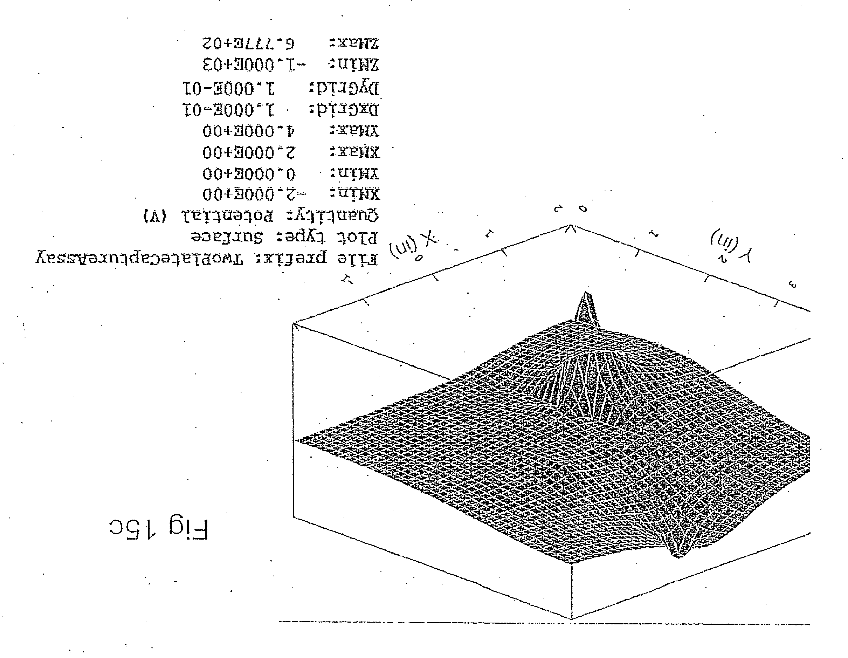

From the same web site, polystyrene resin has dielectric constant in the range 2.4-2.6. In order to cover the span of likely materials for capture means and assay devices, a dielectric constant of 3.0 was applied to the capture means and/or assay device 154 in the computer simulation of Fig 15a, b and c. Again, no significant perturbation of the electric field distribution results, comparing figs 13a, b and c, 14a, b and c and 15a, b and c. These foregoing simulations thus show that there is great freedom in choice and disposition of capture means and assay devices in designs of the present invention.

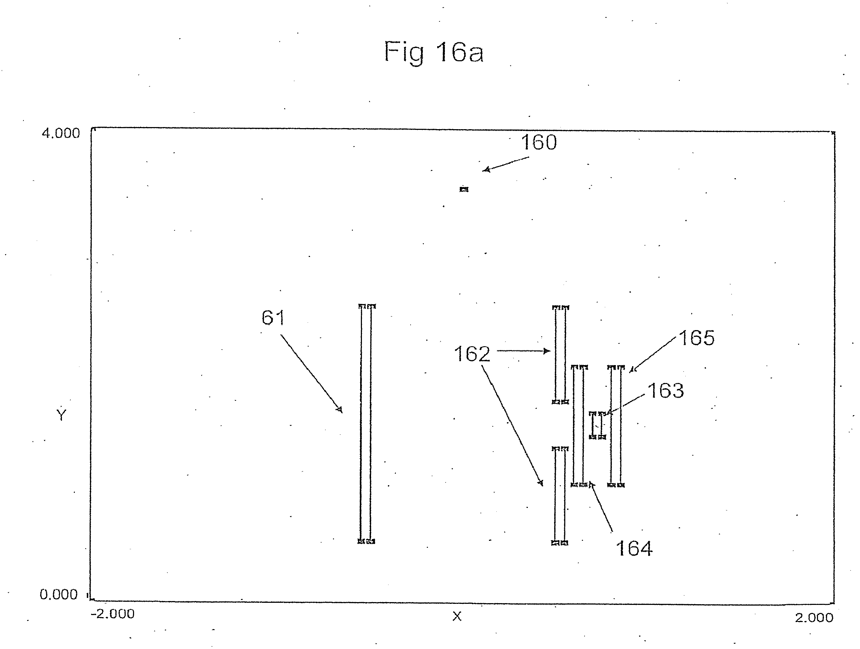

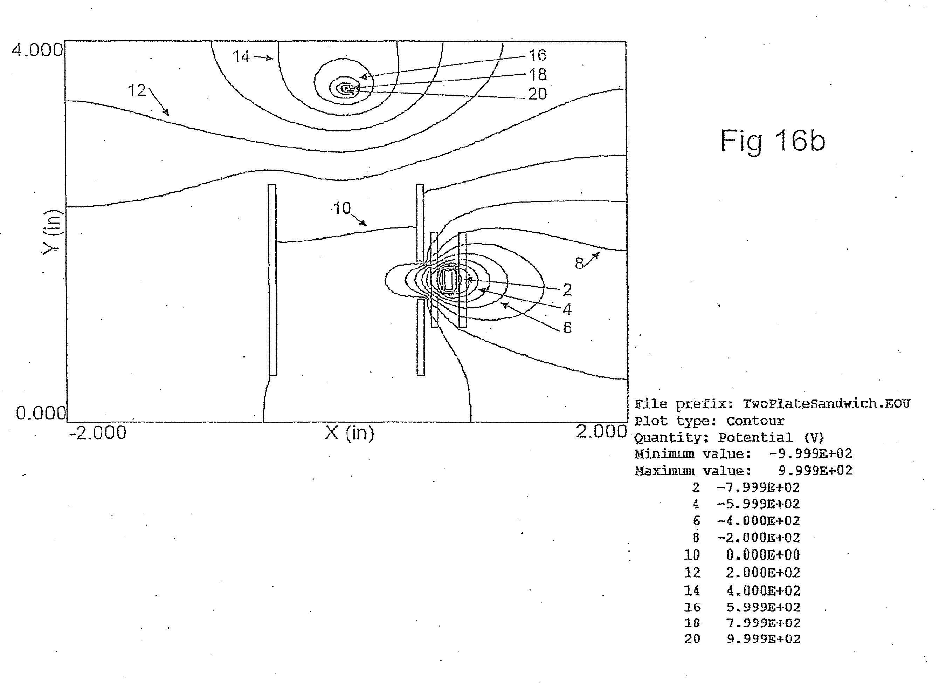

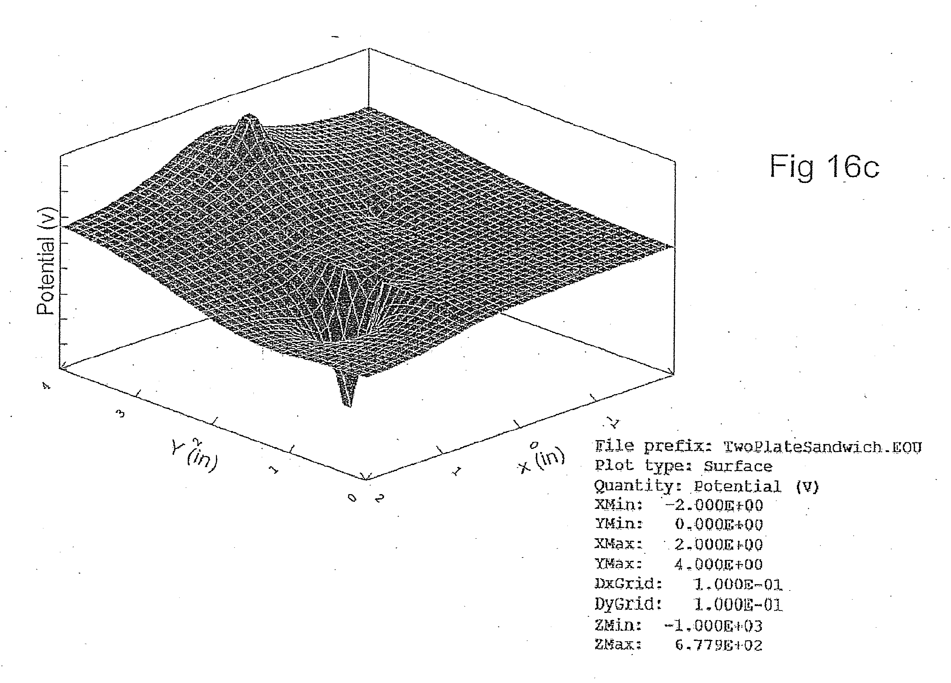

Capture means can be placed on both sides of the capture electrode, as illustrated by 164 and 165 in Fig 16a. As in the preceding Figs 13a, b and c, 14a, b and c and 15a, b and c, there is no significant impact on the electric field distribution.

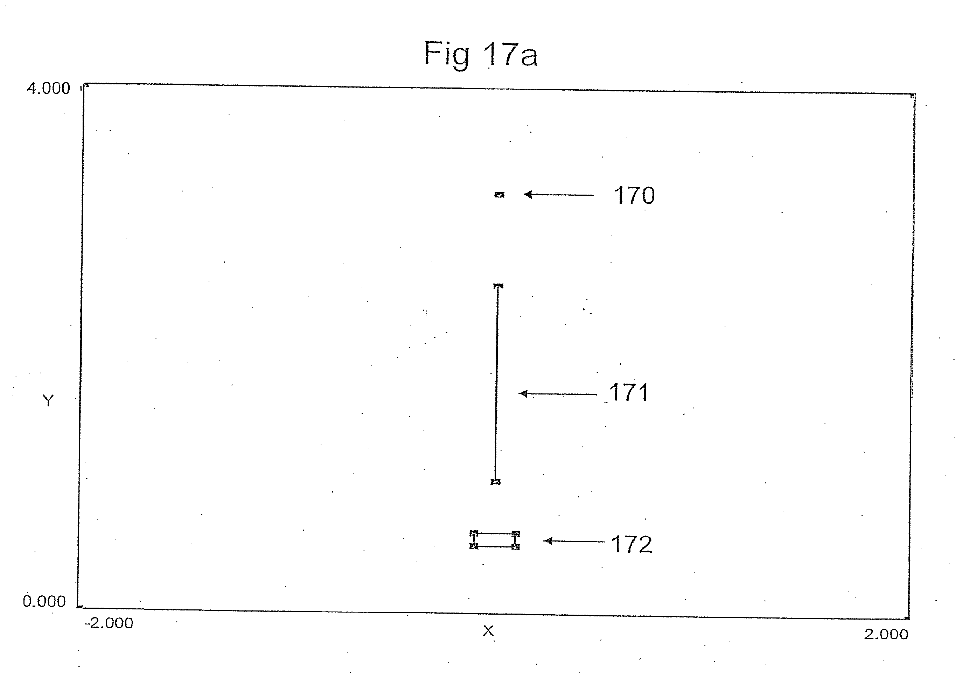

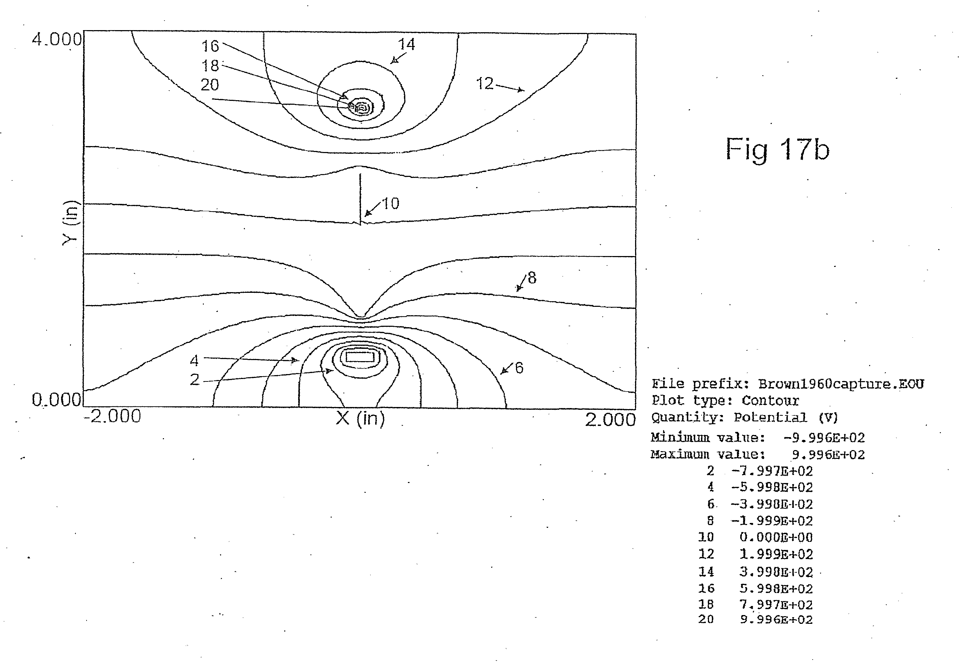

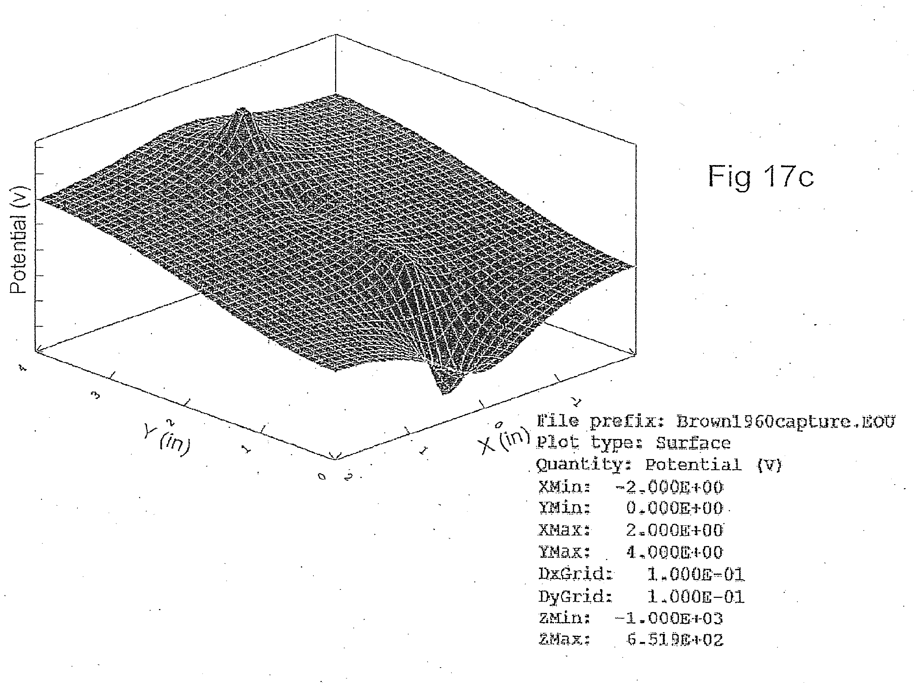

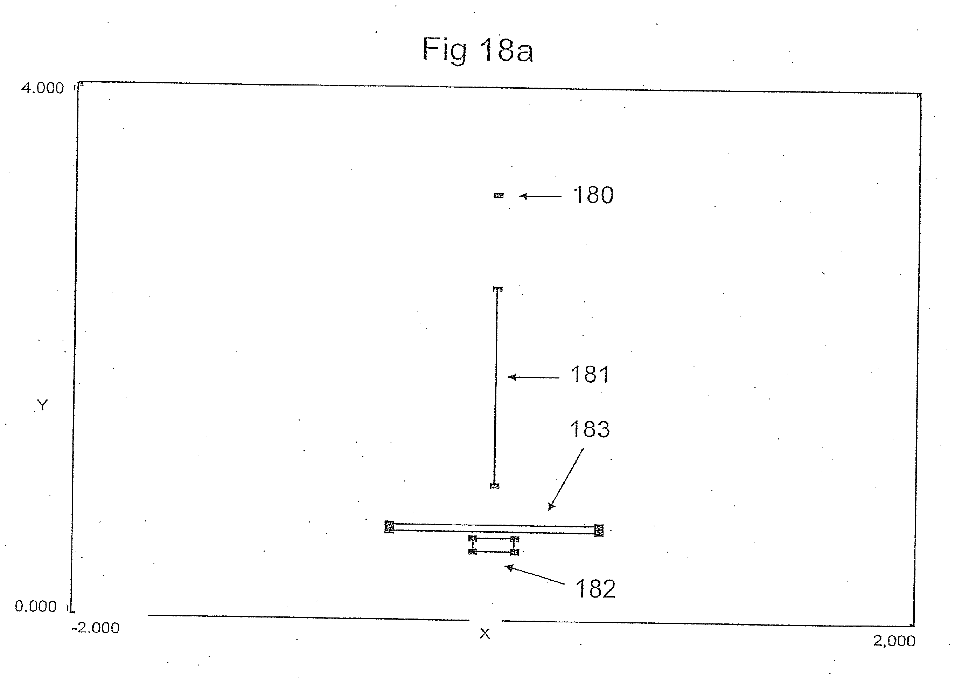

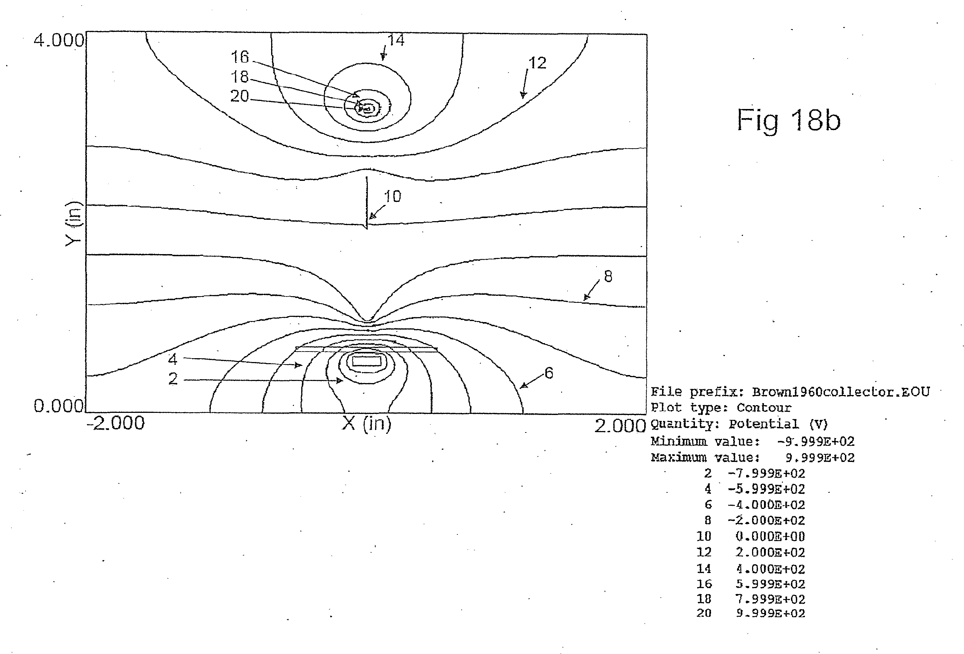

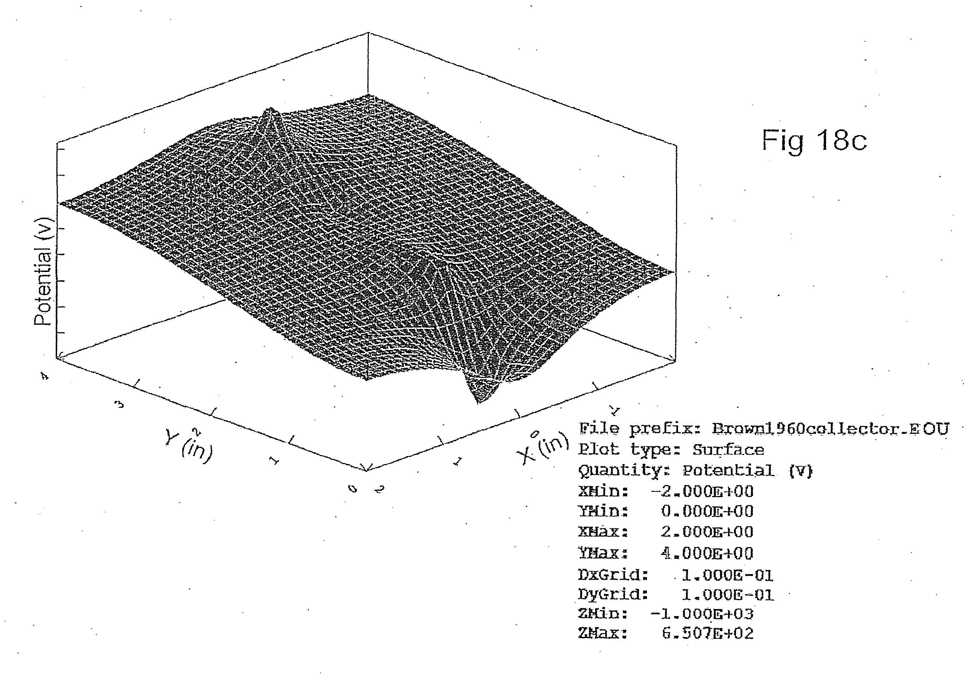

A device according to the present invention based on the prior art device of Fig 10a, b and c is shown in Fig 17a, b and c. This consists of a single wire electrode 170, a single planar electrode 171 and, additionally, a capture electrode 172, situated downstream of the planar electrode 171. This arrangement may be designed to capture charged particles from the fluid flow by concentrating the stream on a center line with the capture electrode centrally placed. Further, the device according to the resent invention in Fig 18a, b and c shows the additional placing of a capture means, 183, of dielectric constant 2.0, between the planar electrode 181 and the capture electrode 182.

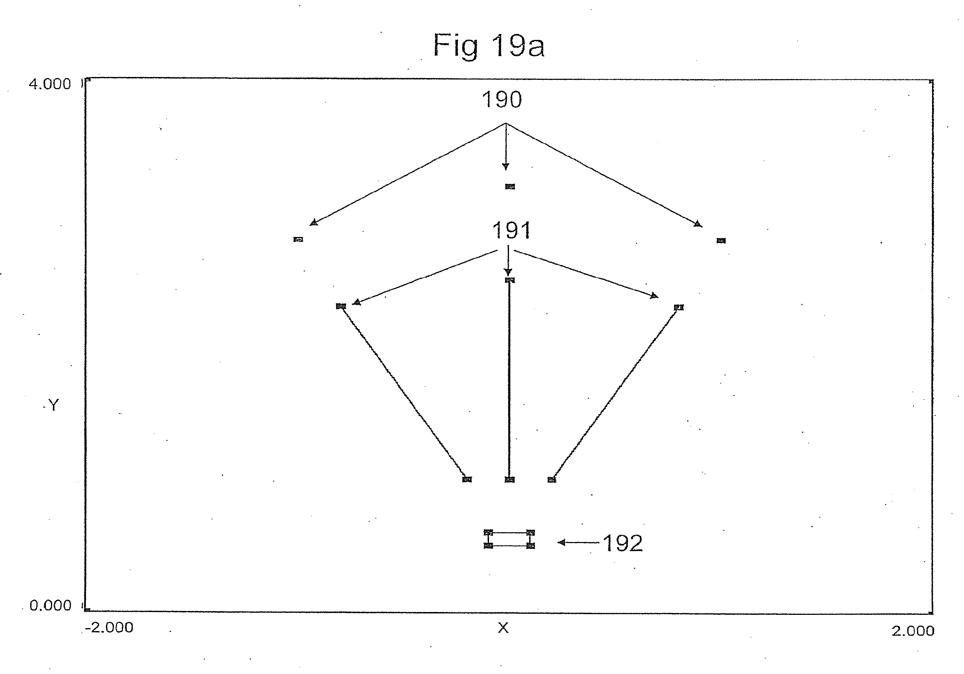

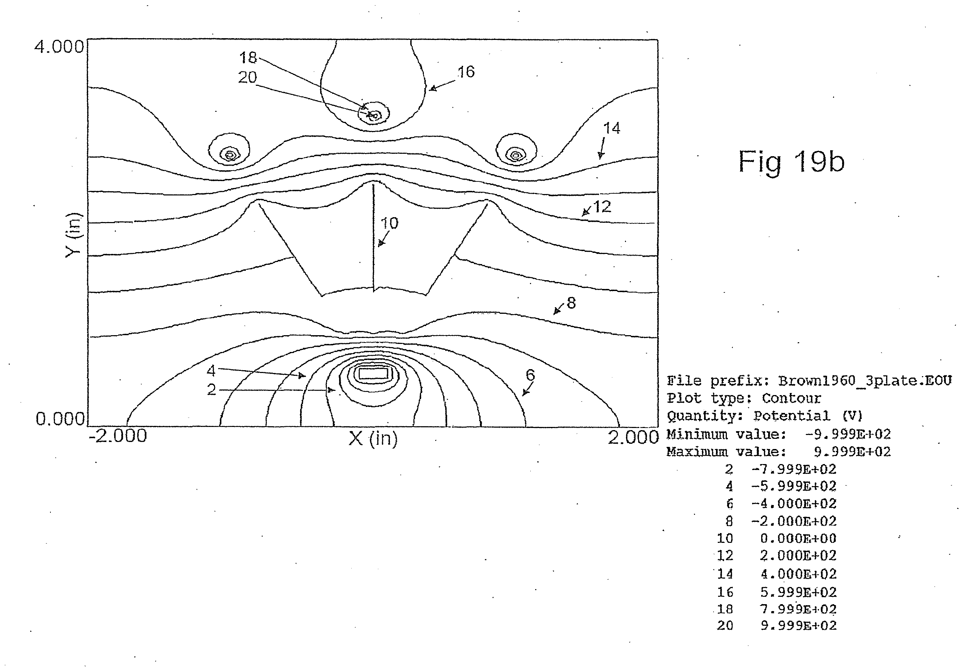

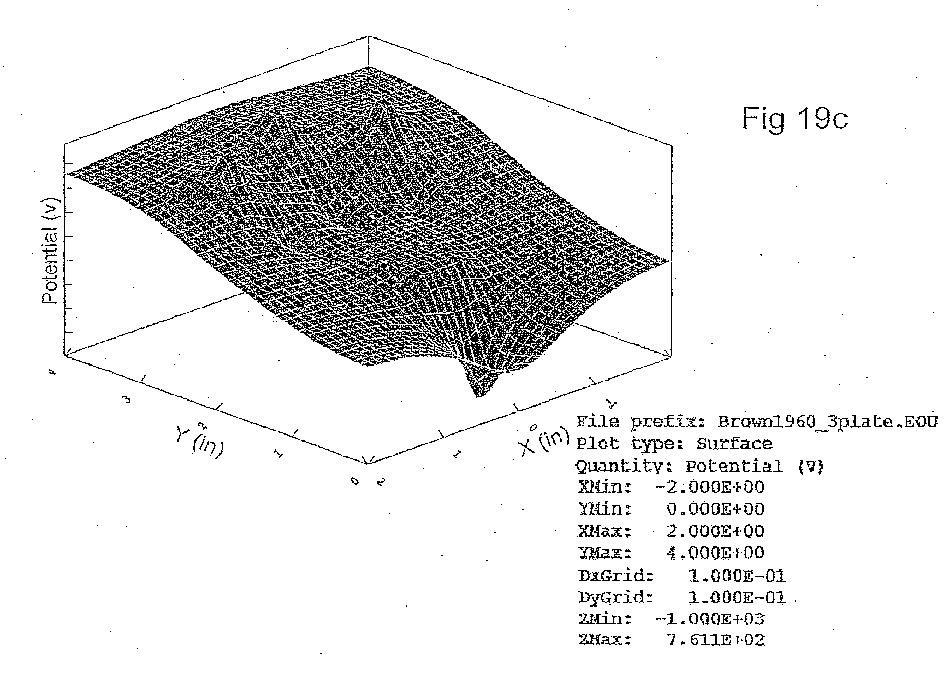

A preferred design according to the present invention is shown in Figs 19a, b and c. Here three wire electrodes 190, and three planar electrodes 191, are disposed at angles so as to maximize the fluid flow to converge on the capture electrode, 192, thus optimizing the combination of fluid flow and electrokinetically directed flow in to the potential well created by the capture electrode.

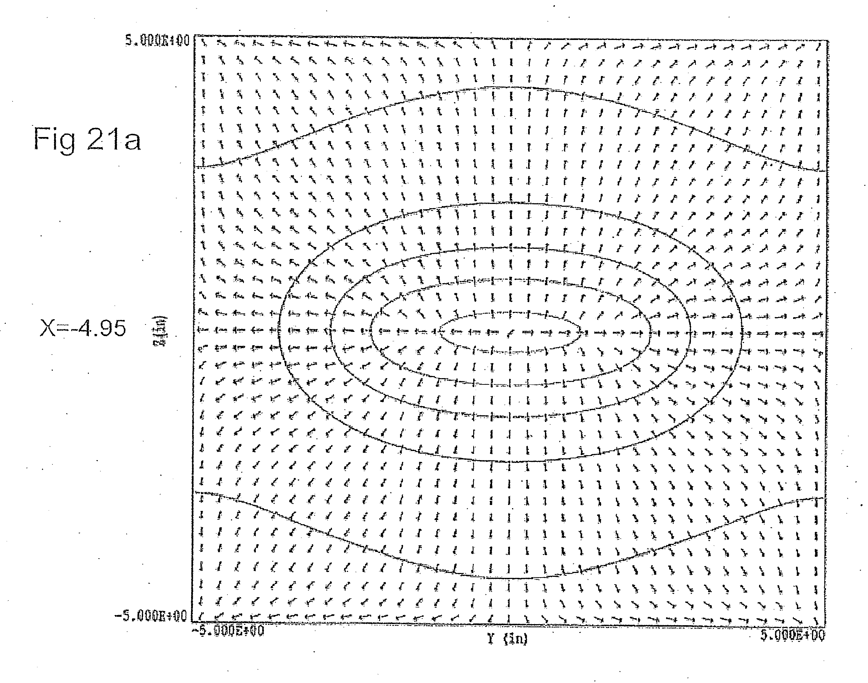

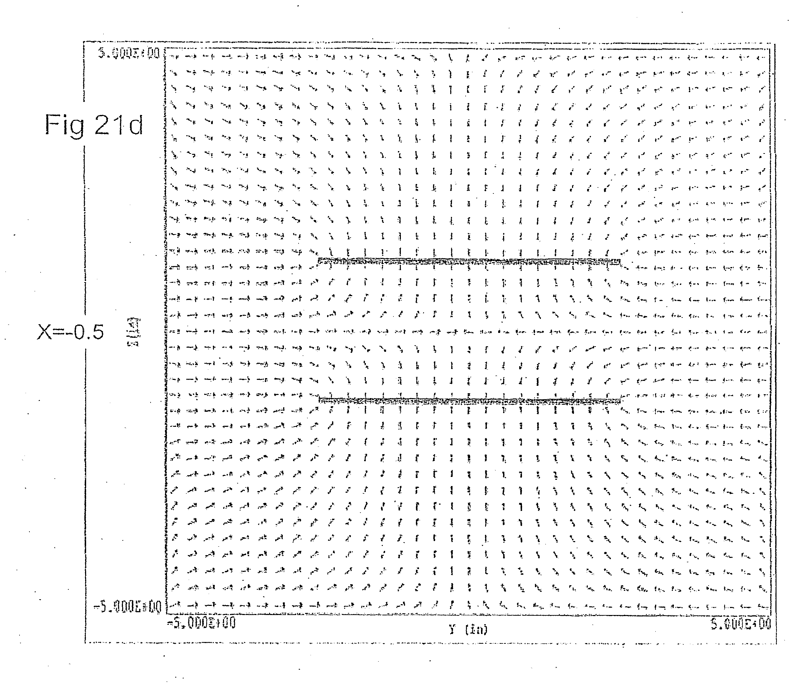

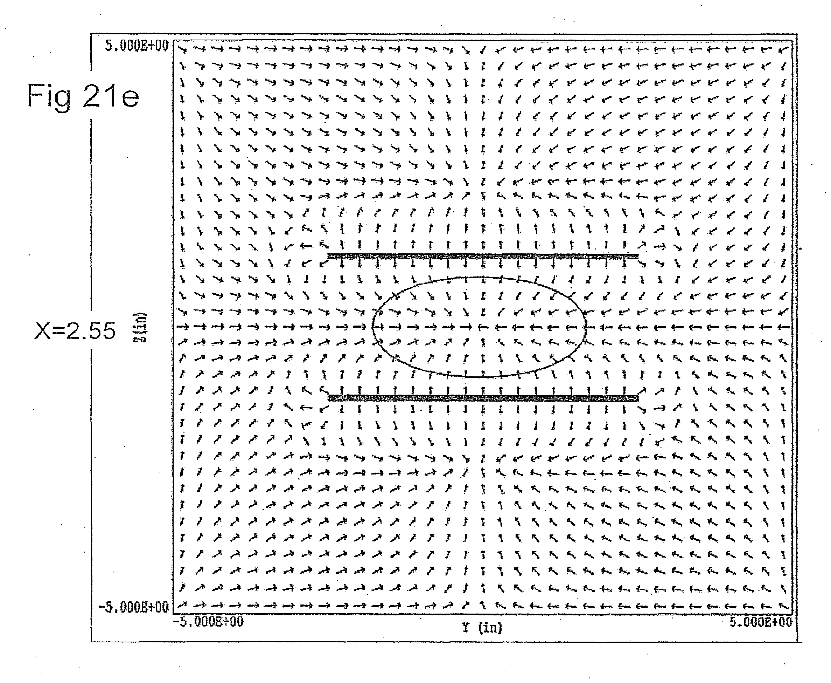

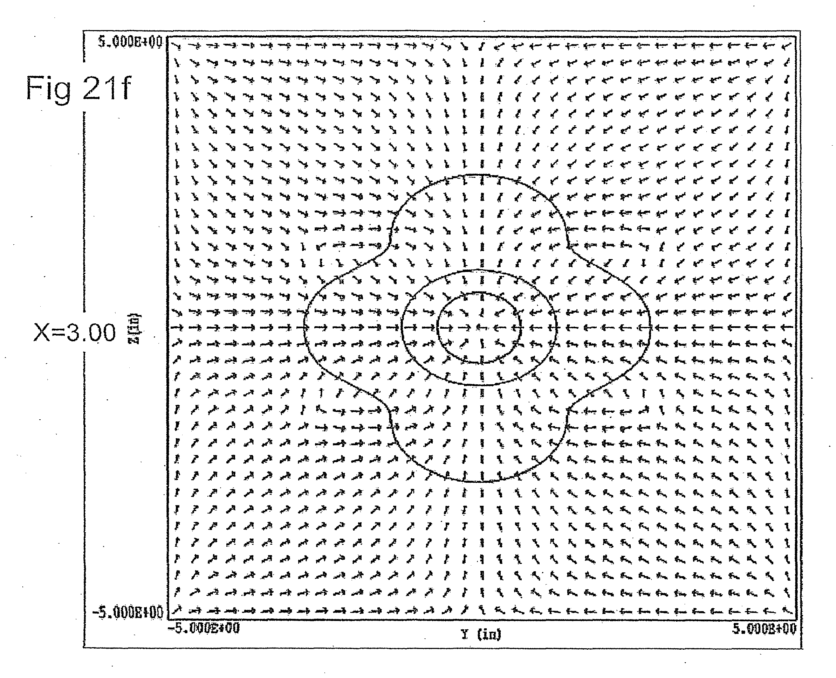

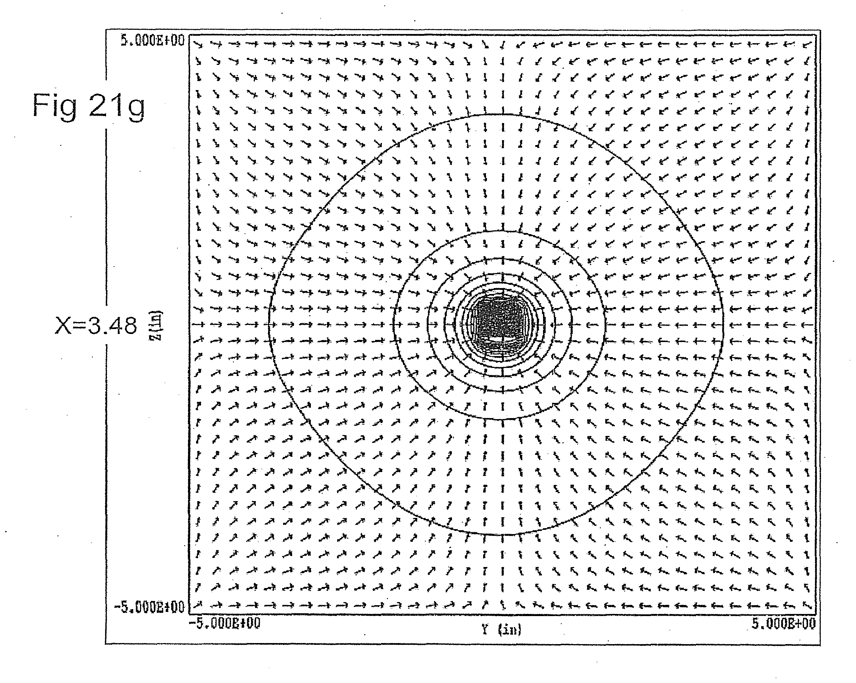

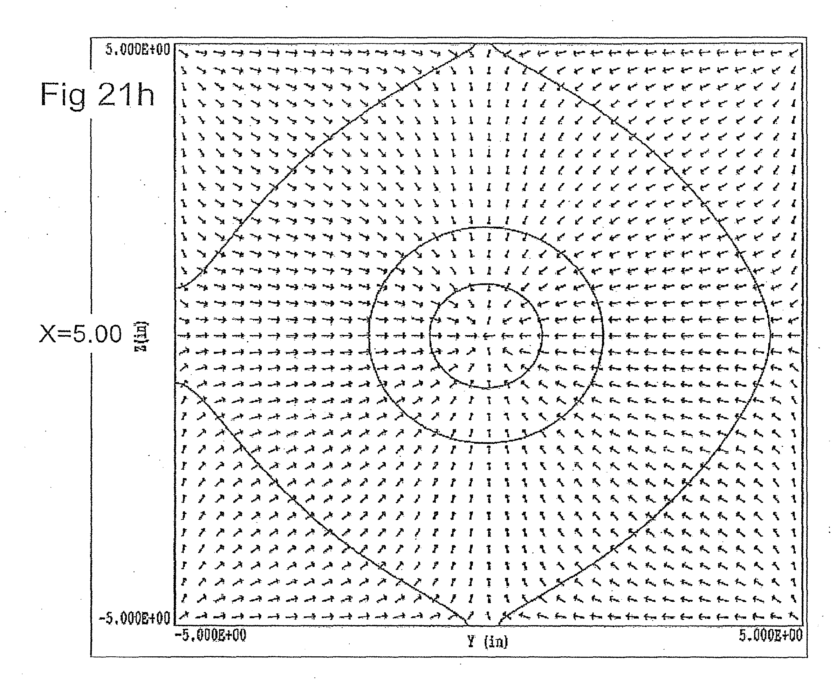

The foregoing computer simulation package is adequate to describe the prior art devices where all sections are equivalent for planes extending into a third dimension. However, it would be desirable to create devices that focus a charged particle stream in three dimensions, thus providing a true focusing effect. For this purpose, a higher level software package from Field Precision LLC is used. This package rigorously solves the same basic physical equations in three dimensional space by the same method of finite element analysis. The program is executed in three stages. The program Geometer has three-dimensional CAD features and is used for the creation of the initial design and visualization, for example, by creation of stereographic diagrams. The program Metamesh takes the output from Geometer and creates the mesh for finite element analysis, and also inputs dimensions and various electrical and physical properties of the components. Hiphi solves the equations for the files created by Metamesh and Phiview performs further optional calculations and provides for a variety of options for representing the output. Thus, the device created in Geometer is displayed in Fig 20a, b c and d. Here, the prior art device of Figs 9a, b and c is provided with an additional capture electrode according to the present invention. The wire electrode 200 is 10 inches in length, the plate electrodes 201 are 10 X 10 inch squares and the capture electrode 202 is 0.5 X 0.5 inches. Plate electrodes 201 and capture electrode 202 are 0.1 inch thick. Fig 20a is a general stereographic view showing the orientations of the x, y and z axes. Fig 20b is a view of the device looking down the x-axis, Fig 20c is a view of the device looking down the y-axis and Fig 20d is a view of the device looking down the z-axis. The definition of the axes and the orientation of the parts relative to these axes are important for the understanding of Figs 21-23 since these represent successive planes progressing through the device along the three axes. The device according to the current invention in Figs 20-23 is provided with a voltage of 1000 at the wire electrode 200, 0 volts at the plate electrodes 201 and -1000 volts at the capture electrode 202. The Phiview program can represent innumerable planes along each of the three axes, but for the purposes of illustration, only those planes which lie at critical junctures in the device are represented here. Thus, Fig 21 a is in the y-z plane at the position X = -4.95

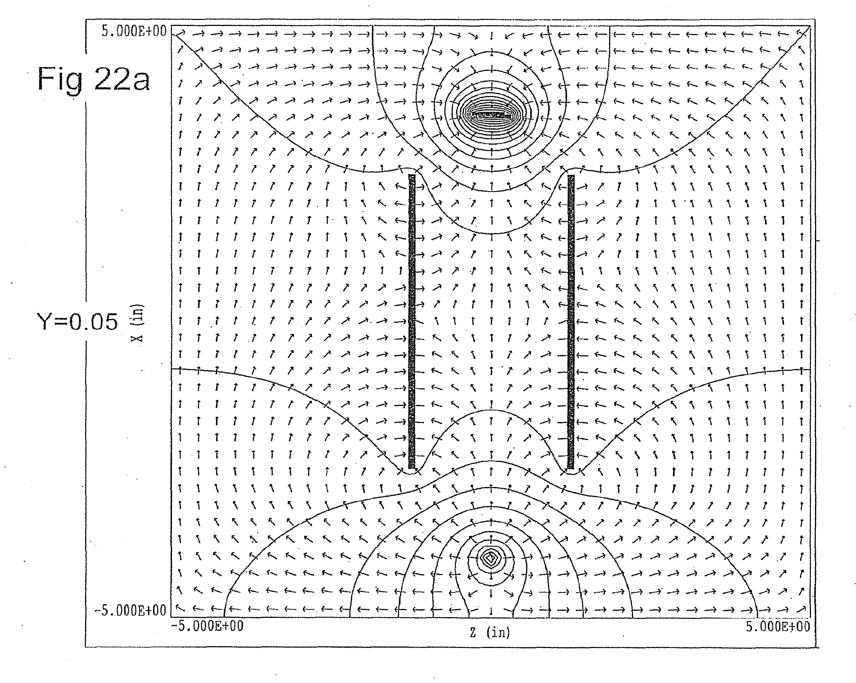

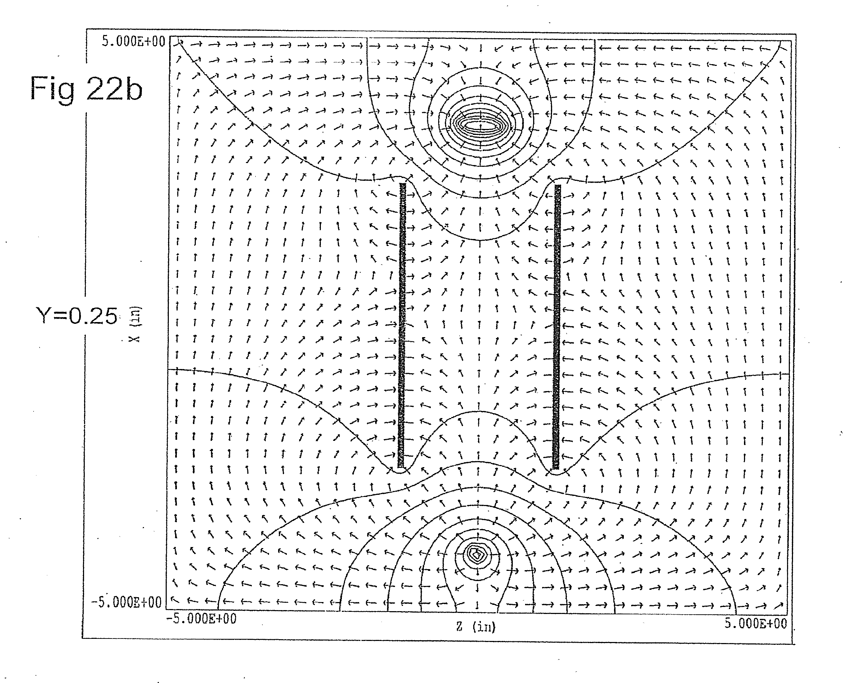

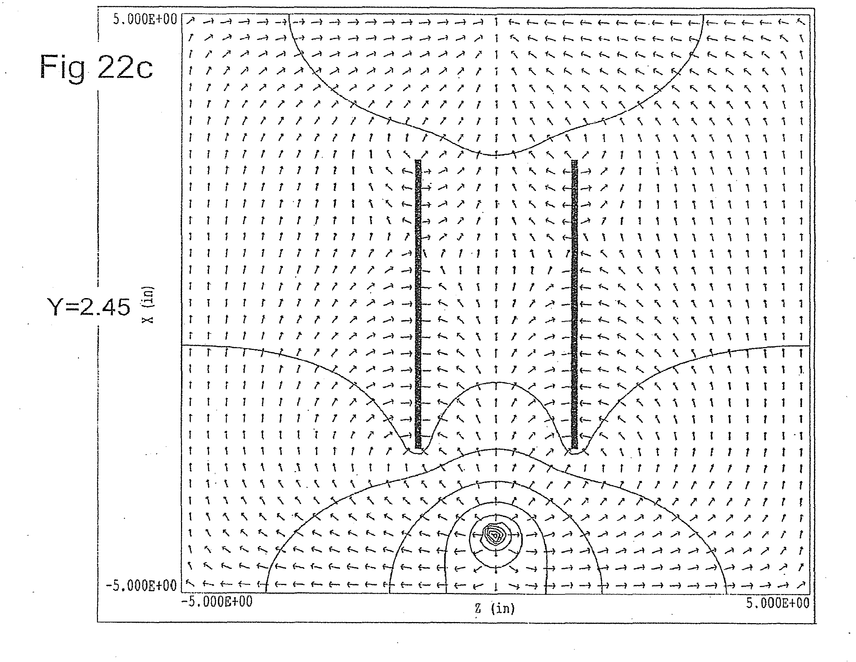

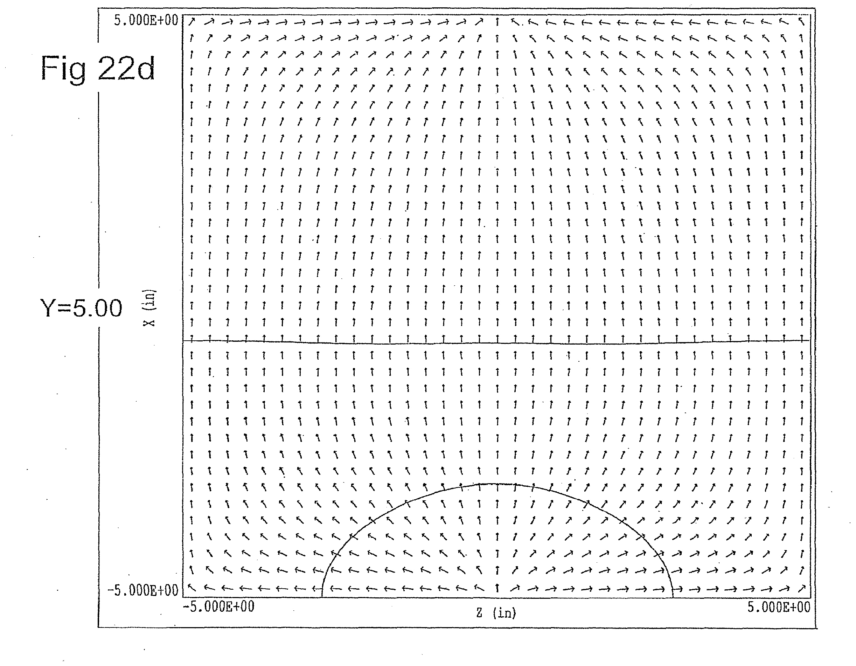

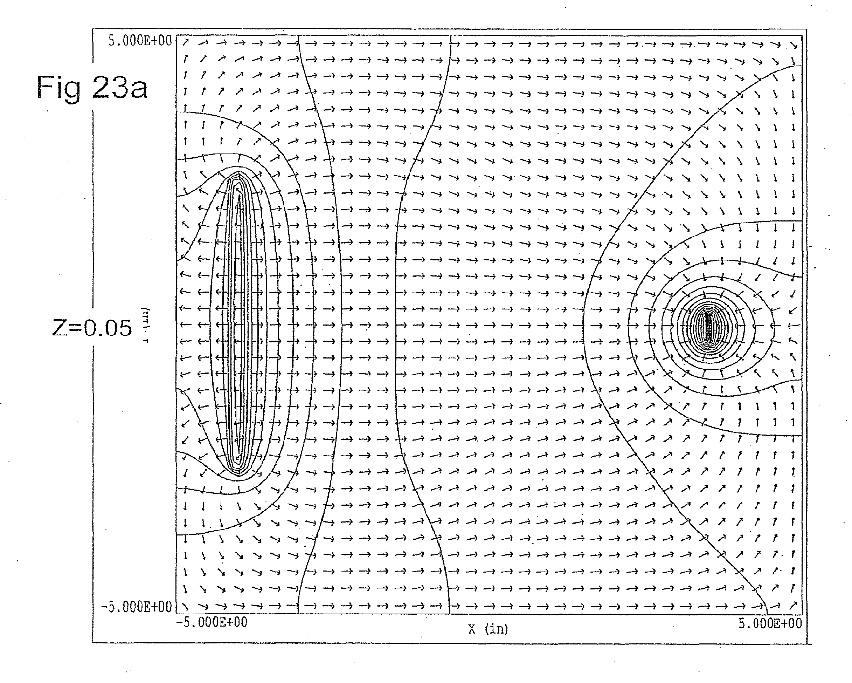

The position of the plane is indicated on the vertical axis of each figure. The contour lines of constant voltage are at approximately 100 volt intervals. The density of the contours is an indication of the field strength and hence the force applied to charged particles. The arrows are vectors representing field direction in each cell for which there has been a calculation. Thus, in Fig 21 a there is a moderate force field propelling charge particles away from the center line. Note that this is only the component of the vector in the Y-Z plane, and here, as everywhere else, the final direction is the result of vectors in all three dimensions. The successive figures 21b-21h then step successively through the entire device. Fig 21b cuts through the plane in which the wire electrode 200 lies, and shows very high field strength propagating out from the wire. Next, Figs 21c-e cut through orthogonally to the planar electrodes at the extremities and at the center. The field intensity is relatively low in this region, being less than 10 volts per inch, as indicated by one or less contour lines. Figure 21f falls intermediate between the planar electrodes and shows increasing voltage gradient in the direction of the center of the section. Fig 21g shows a section through the capture electrode and shows extremely high voltage gradient forming the potential well. Finally, the plane at x = 5 inches shows moderating field strength, but continued direction of vectors to the center line. Surprisingly, any charged particles exiting the device will be swept into the center of the y-z plane, and from Figs 22a and 23a, back into the potential well along the X axis.

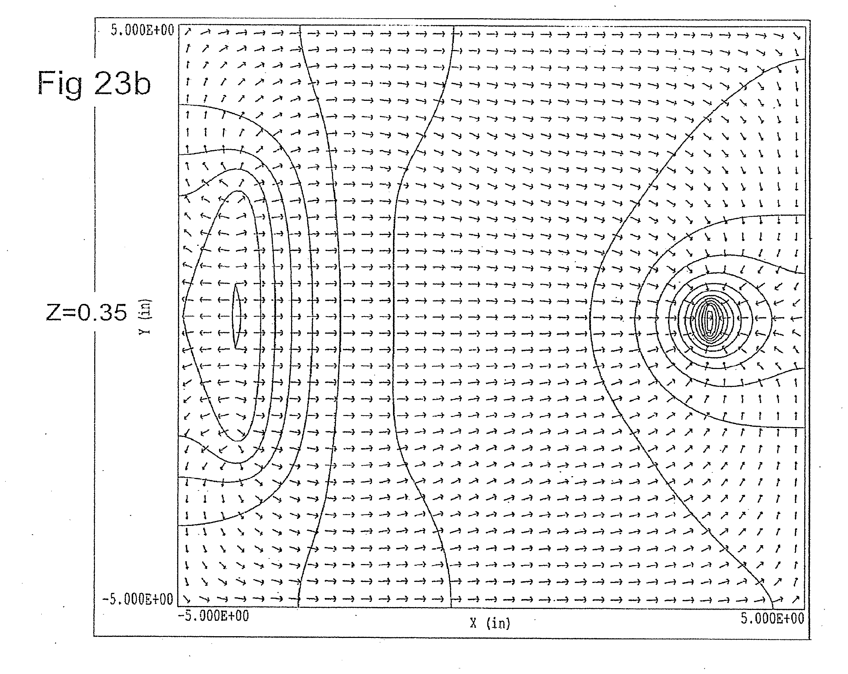

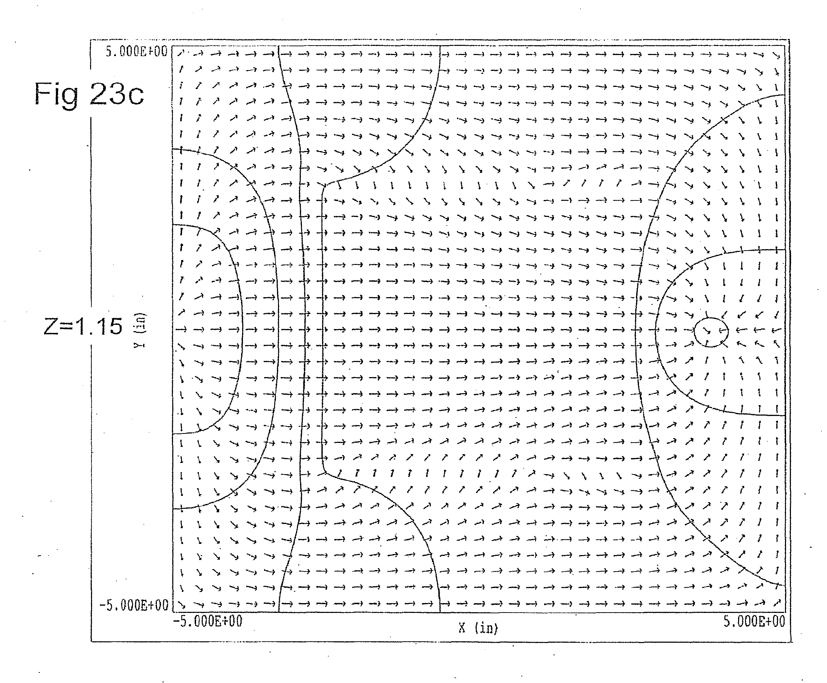

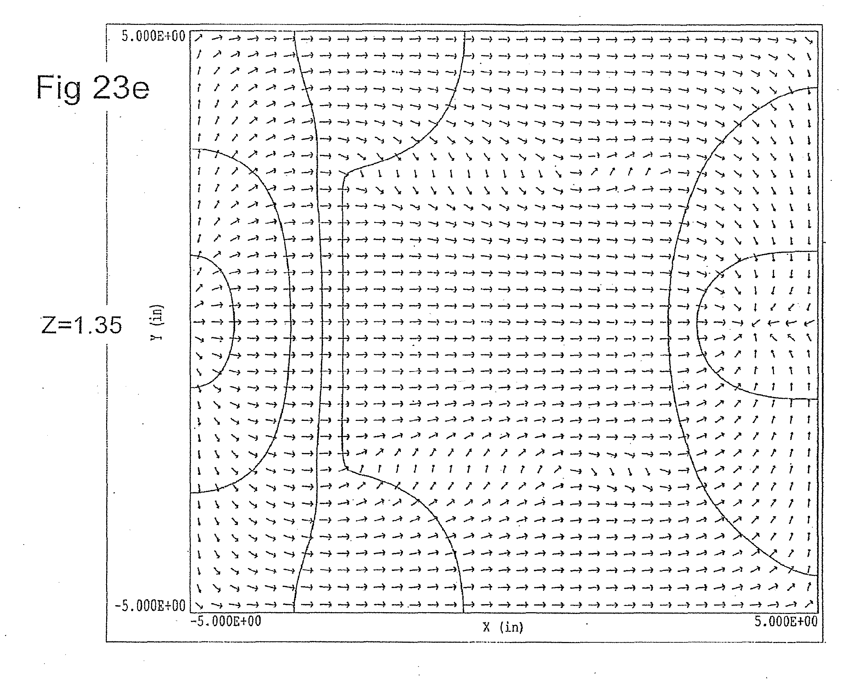

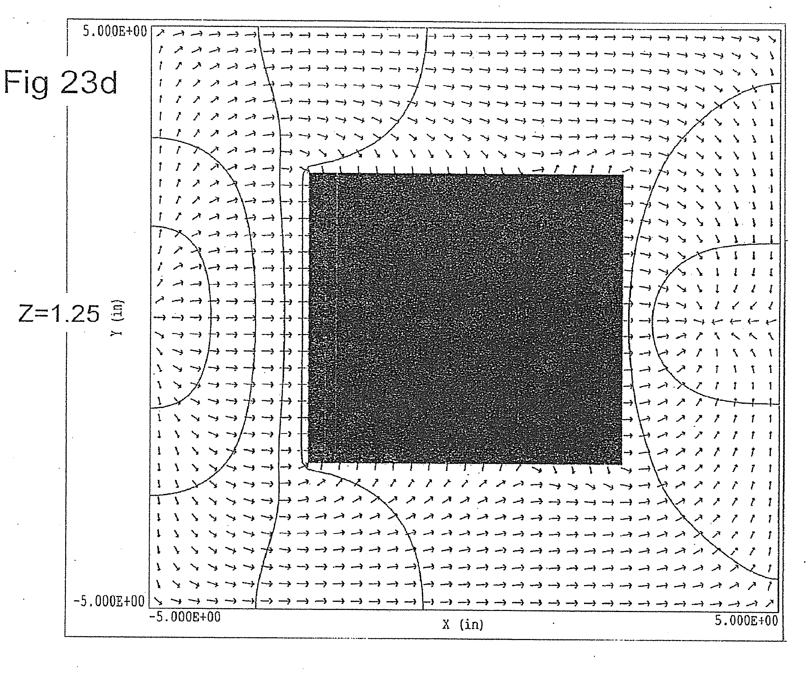

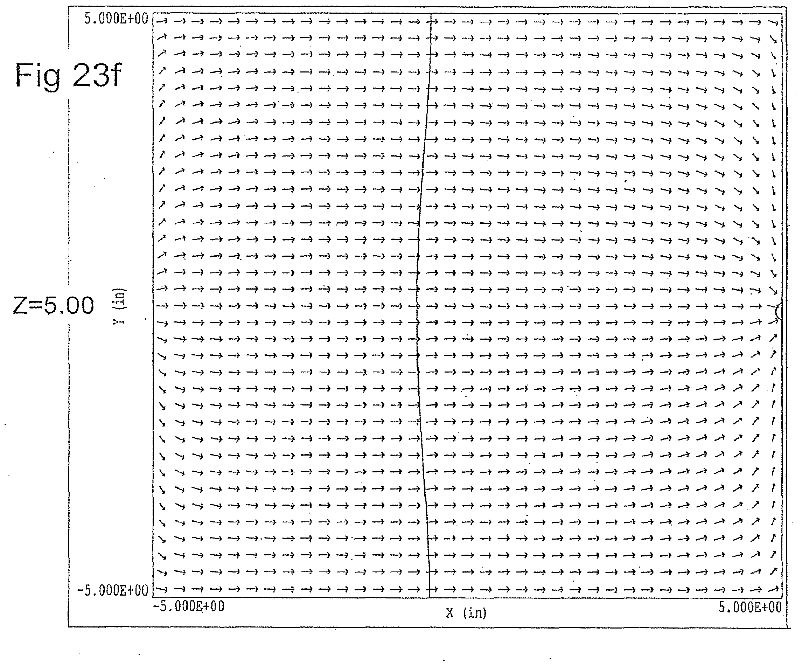

Figs 22a-d show successive x-z planes progressing from the origin outward along the y axis. No sections for negative values of y are shown since the device is symmetrical around the origin of the y-axis. A similar consideration holds for Figs 23 a-f along the z-axis.

Fig 22a confirms the findings of the two dimensional analysis software package, with the exception that out of the neighborhood of the center line of Fig 22a, vectors direct the stream away from the plate electrodes, or downstream. Further, every section of Fig 23 shows the x-y components of the vectors pointing downstream. Hence, the electroprecipitation on the plate electrodes will be minimal. Fig 23a shows the section including the wire electrode in the x-y plane, and including the capture electrode. In this section, the forces propelling charged particles from the wire electrode into the potential well of the capture electrode are apparent. Fig 23b is a section of the x-y plane just proximal to the capture electrode, and then 23c, 23d and 23e proximal to, cutting through and distal to the plate electrode, which is visible in Fig 23d.

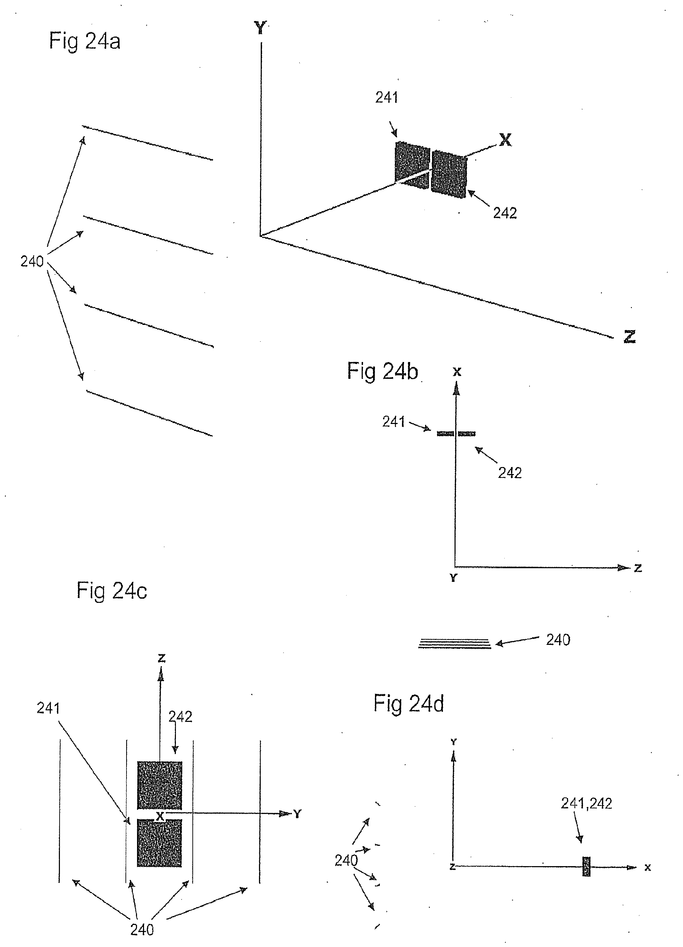

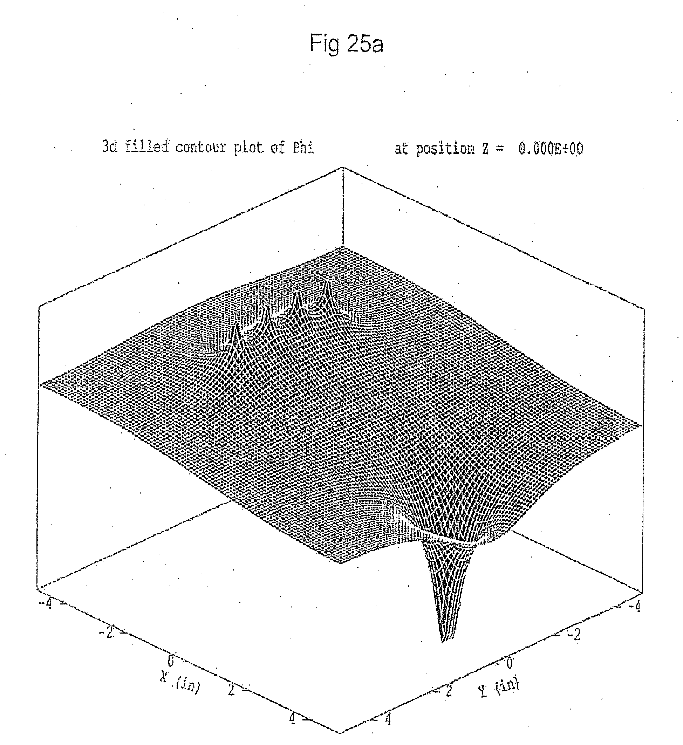

A further embodiment of the present invention is illustrated in stereographic projections in Figs 24a, b and c generated in the Geometer program. This embodiment is intended to function as a breathalyzer device for breath-borne pathogens such as M. tuberculosis. This can be implemented using a structure similar to Fig 3 but eliminating the fan 36. Instead, the user blows into the entrance grill 31. The entrance grill 31 directs breathed air flow in the enclosure. Fig 24a represents a general perspective view of the electrode arrangement, showing all three X, Y and Z axes. Fig 24 b is a view looking down the Y-axis, Fig 24c is a view looking down the X-axis and Fig 24d is a view looking down the Z-axis. The Fig 24 shows only the arrangement of the electrodes, and, for ease of understanding, the supporting structures which are made of materials in a range of dielectric constants that do not influence the electric field, are omitted, The device includes 4 wire electrodes for generating plasma and two capture electrodes which may be used for collection means for two different assay types. Thus, capture electrode 241 may be used for an optical sensor device utilizing an immunoassay (immunosensor), as described in detail in patent US 7,384,793, while capture electrode 242 may be used as a capture device for the nucleic acid polymerase chain reaction amplification based system Xpert MTB/RIF as described in Blakemore et al (2010) in Journal of Clinical Microbiology, volume 48, pages 2495-2501, Helb et al (2010) in Journal of Clinical Microbiology, volume 48, pages 229-237, and references therein, In a first phase, the target nucleic acid of the sample nucleic is recognized by a hybridization reaction and subsequently detected by real time polymerase chain reaction. An examples of immunosensor devices that may be used in conjunction with capture electrode 241 is where a fluorescent signal scattered from an immunocomplex at an immunosensor surface, illuminated by an evanescent wave, is a measure of the substance to be analyzed. The performance of this embodiment is processed with MetaMesh and results generated with HiPhi. Figs 25a and b represent two views created from PhiView. These two views selected from the complete three dimensional analysis are sufficiently representative to demonstrate the performance. Fig 25a is a pseudo-3D contour plot showing the electric field distribution in an X-Y plane intersecting the origin of the Z-axis. The Z-axis is not a physical Z-axis but represents the range 0-1000 volts. It can be seen from Figs 24a, b, c and d that this plane will intersect all four wire electrodes and midway between the two capture electrodes. It thus shows the formation of potential peaks at the wire electrodes for the generation of plasma and a potential well in the neighborhood of the capture electrodes, which will serve to capture and electroprecipitate charged particles. A further contour plot in Fig 25b is the voltage distribution in a parallel plane displaced 1 inch out on the physical Z-axis. This plane skirts the extremity of the wire electrodes, which are 2 inches in length. Here, too, can be seen the potential peaks at the wire electrodes and the residual potential well that is here 0.5 inches beyond the extremity of the capture electrode. The ability to incorporate two capture electrodes in this case enhances the sensitivity of the assay by providing for two entirely different assay systems for the same analyte. A further improvement is for the electrode 242 to be replaced by a wire mesh of the same dimensions. A wire mesh electrode has the advantage of creating even greater localized voltage gradients in close proximity to the wires, and thus enhances the capture effect. Following sample collection, the wire mesh electrode is removed, immersed in 2 ml of the NaOH-isopropanol sample treatment reagent, shaken for 5 seconds, incubated at room temperature for 15 minutes, shaken again, and transferred to the Xpert MTB/RIF cartridge and subject to the standard procedure for that assay device. The NaOH-isopropanol reagent is provided by Cepheid Inc, the manufacturer of the Xpert MTB/RIF assay device.

Further multiplex capability can be attained by the use of a multiplicity of capture electrodes. While Figs 24a, b and c and 25a, b and c show the disposition of electrodes in the breathalyzer device, further details of mouthpiece, housing, and interface with an assay device are described in the specifications of US 7,384,793 as well as collection means and assay device commercialized by Rapid Biosensor Systems Limited, Babraham, Cambridge, UK. A tubular or elliptical section housing can be constructed to accommodate the mouthpiece, with entrance diameter optimized to match the dimensions of the wire electrodes and the exit diameter optimized to match the dimensions of the capture electrodes. The breath will then have maximum contact with wire electrodes, and exit flow can be concentrated over the capture electrodes.

It is apparent that the software packages provided by Field Precision LLC are useful for achieving optimal designs without undue experimentation. Such programs have been under development for several years. P. L.Levin et al ("A Unified Boundary-element Finite-element Package" in IEEETransactions on Electrical Insulation 1993, volume 28, pages 161-167) made such a package available, Examples of application of such software packages for the design of electrostatic precipitation devices are given by S.Vlad ("Numerical Computation of Conducting Particle Trajectories in Plate-type Electrostatic Separators" in IEEE Transactions on Industry Applications 2003, volume 39, pages 66-71) and by A.Bendoaoud et al ("Experimental Study of Corona Discharge Generated in a Modified Wire-plate Electrode Configuration for Electrostatic Process Applications" in IEEE Transactions on Industry Applications 2010, volume 46, pages 666-671). Optimization of the designs of the present invention is not limited to the software packages provided by Field Precision LLC.

A key element of the present invention is the provision of a potential well that will act as a trap for charged particles of interest in a flowing fluid stream. It is possible to design innumerable devices within the scope of this invention, and the configuration shown in the illustrations of this document are intended to be exemplary only. It is surprising that creation of a potential well provides a universal and efficient trap for charged particles and provides for seamless transfer on to a measuring or detection device. The sensitivity of the measurement of the detection or detection device is considerably enhanced by the ability to sample large volumes of fluid and to concentrate the charged particles on to a small area of a detection device. Because the properties, disposition and dimensions of non-conducting materials do not significantly affect the voltage field distribution, there are unlimited possibilities for the design and fabrication of devices for practical applications, using, for example any of a wide range of plastic or polymeric non-conducting materials.

In the devices described in the foregoing, the area of the capture electrode is small compared with other electrodes in the system, thus providing a large voltage gradient. In the examples, typical ratios of areas of capture electrodes are 20:1. Depending on the construction of the specific device, this ratio may vary in the range 5:1 to 1000:1 or even greater, limited only by the performance requirements of the specific system. The capture electrode is usually in the form of a rectangular plate, but may also take the form of a metal grid or mesh. In the case of a multiplicity of wire electrodes for generating plasma, these are usually arrayed as parallel wires, but may also be arranged as a rectangular grid, depending on the requirements or constraints of a specific design. The only constraint is that the geometry of the capture electrode may not be such as to create a potential well with gradient so steep as to initiate plasma generation, and generate charged particles that will be launched out of the potential well. The capture electrode dimension must be sufficiently small compared with the wire electrodes that an advantageous focusing effect will take place. A rule of thumb may be the use of the ratio of the longest dimension of the capture electrodes to the sum of the lengths of the wire electrodes. A practical useful range may be with a lower limit of 1:5, below which a useful concentration of the charged particles may not take place. Smaller or larger ranges may be useful for specific design requirements.

On the contrary, the wire electrodes must be of dimensions small enough that they will create a potential gradient sufficient to cause the generation of plasma. The wire electrodes advantageously do not exceed 1.0 mm in diameter and in one embodiment may have a diameter of approximately 0.1 mm. However, the geometry of the wires may be varied and may also take the form of spikes with pointed tips. In this case, the pointed tip may give rise to a local potential gradient high enough to give rise to the formation of charged plasma.

The voltages applied must be sufficiently large to create the conditions for the functioning of the invention, but voltages can be varied to optimize the performance, The voltage values may be positive or negative at either the wire electrodes or the capture electrodes. For functioning, only relative voltages are important, so that any electrode may also be set at ground or low voltage, for example, for safety reasons.

For reduction to practice, the devices of the current invention can be fabricated from simple modifications of existing devices. Thus, all the specifications for details of hardware, electronic control, aesthetic considerations, dimensions, portability, power supply from ac mains or battery, are all described in detail in the prior art references given in this document, and so need no further elaboration here.

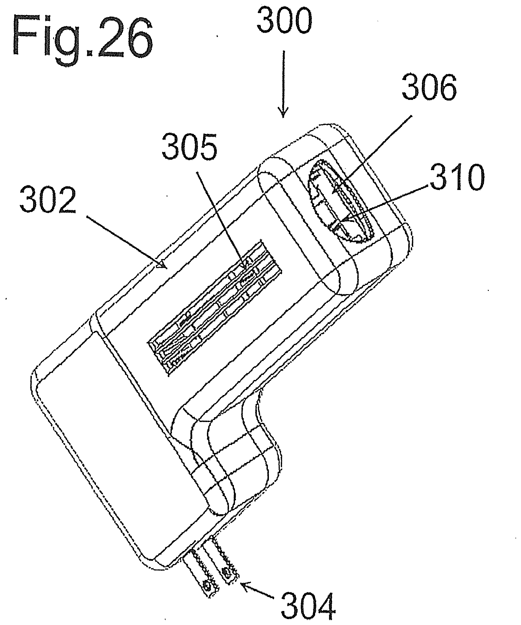

Figs 26-32 illustrate the adaptation of an existing commercial device, such as the Ionic Breeze air freshener for small spaces, formerly sold by Sharper Image in the USA, to provide an electrokinetic device for capturing assayable agents in a dielectric fluid using removable electrodes. Fig 2, above, illustrates a typical schematic which is similar to that for the Ionic Breeze air freshener for small spaces, although it has a different number of electrodes. The typical prior air freshener devices include a removable carrier with planar electrodes sonically welded thereto. The carrier is removable for cleaning the electrodes.

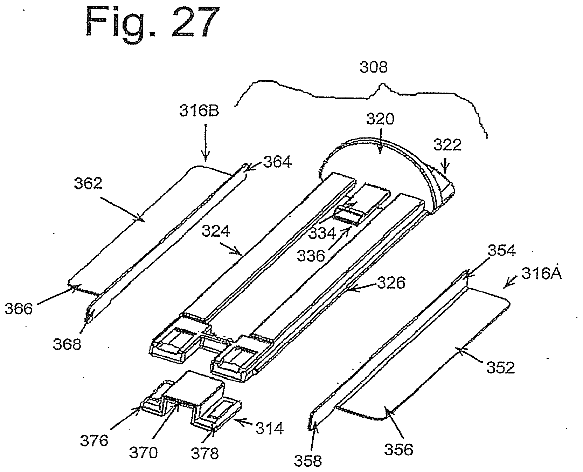

Referring to Fig 26, an ionic propulsion device 300 for capturing assayable agents in a dielectric fluid includes a housing 302 having an electrical plug 304 for insertion into a conventional AC outlet. The housing 302 includes a grill opening 304. The distal end of the housing 302 includes an opening 306 for receiving a removable carrier assembly 308, see Fig 27. The carrier assembly 308 is slidably received on a track 310 in the housing 302. The housing 302 includes an electrical circuit which operates similar to the device shown in Fig 2 with the use of a single wire electrode 21 and two planar capture electrodes 23. As is apparent, other housing shapes could be used.

Referring to Fig 27, the carrier assembly 308 includes a one piece plastic carrier 312, a latch 314 and capture electrodes 316A and 316B. The capture electrodes 316A and 316B, are identical, except for being mirror images of one another.

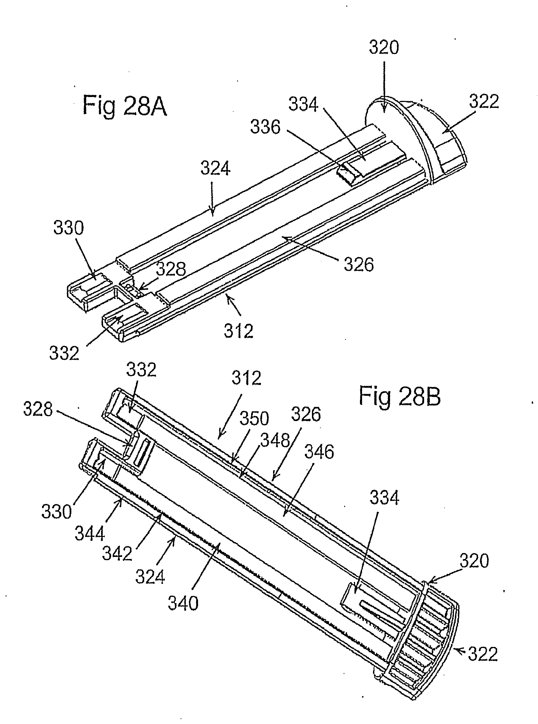

The carrier 312 is shown in greater detail in Figs 28A and 28B. The carrier 312 includes an end wall 320 of a size and shape corresponding to the housing opening 306, see Fig. 26. A handle 322 extends outwardly from the end wall 320. A pair of elongate, co-planar rails 324 and 326 extend inwardly from the end wall 320. The rails 324 and 326 are parallel to one another. A cross piece 328 connects distal ends of the rails 324 and 326. A distal end of the first rail 324 includes a terminal opening 330 for providing an electrical connection, as described below. Similarly, a distal end of the second rail 326 includes a terminal opening 332.

A latch support 334 extends inwardly from the end wall 320 between the rails 324 and 326. An enlarged head 336 is provided at a distal end of the latch support 334.

The first rail 324 comprises a generally planar wall 340 connected at an outer edge to a downwardly turned wall 342 which is in turn connected at a lower edge to an outwardly turned flange 344. Similarly, the second rail 326 includes a planar wall 346 and connected at its outer edge to a downwardly turned outer wall 348 having a lower edge connected to an outwardly turned flange 350. The configuration of each of the rails 324 and 326 is adapted to support the respective electrodes 316A and 316B and to be slideably received in the track 310 in the housing 302, see Fig 26.

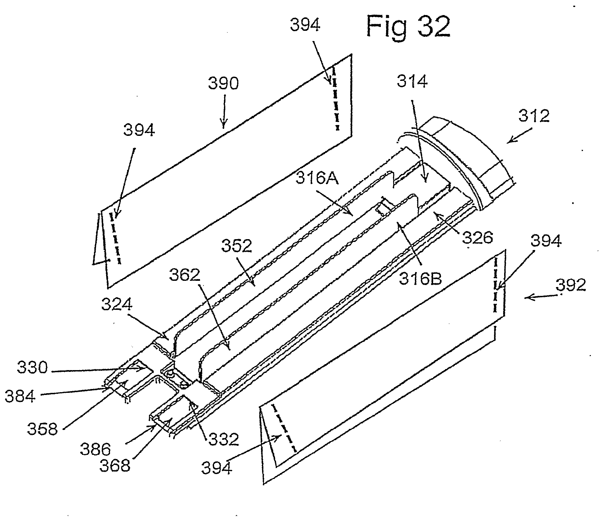

Referring to Fig 27, the first capture electrode 316A is formed of a single plate 352 of conductive metal. The plate has a connecting portion 354 approximately equal to the length of the rail 324, less the length of the latch support 334. The plate 352 is turned inwardly to define an electrode portion 356 of a shorter length. Thus, a distal terminal end 358 extends beyond an edge of the electrode plate 356. In use, the connecting portion 354 is positioned on an underside of the first rail planar wall 340 with the terminal end 358 exposed in the terminal opening 330. The electrode portion 356 extends upwardly, see Fig. 32.

Similarly, the second capture electrode 316B comprises a conductive metal plate 362 having a connecting portion 364, an electrode portion 366 and a terminal end 368. In use, the connecting portion 364 is positioned on an underside of the second rail planar wall 346 with the terminal end 368 exposed in the terminal opening 332. The electrode portion 366 extends upwardly, see Fig. 32.

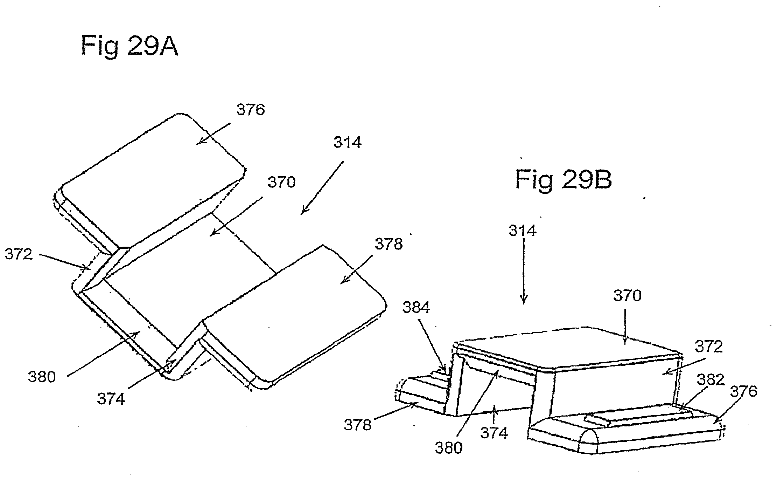

Referring to Figs 29A and 29B, the latch 314 comprises an upper wall 370 connected to opposite side walls 372 and 374. Opposite lower edges of the side walls 372 and 374 are connected to outwardly extending flanges 376 and 378, respectively. An outer edge of the underside of the top wall 370 includes a ramp 380. The flanges 376 and 378 include respective ledges 382 and 384.

The spacing between the side walls 372 and 374 is slightly less than spacing between the rails 324 and 326. The overall width between outer edges of the flanges 376 and 378 is slightly less than the spacing between the rail outer walls 342 and 348.

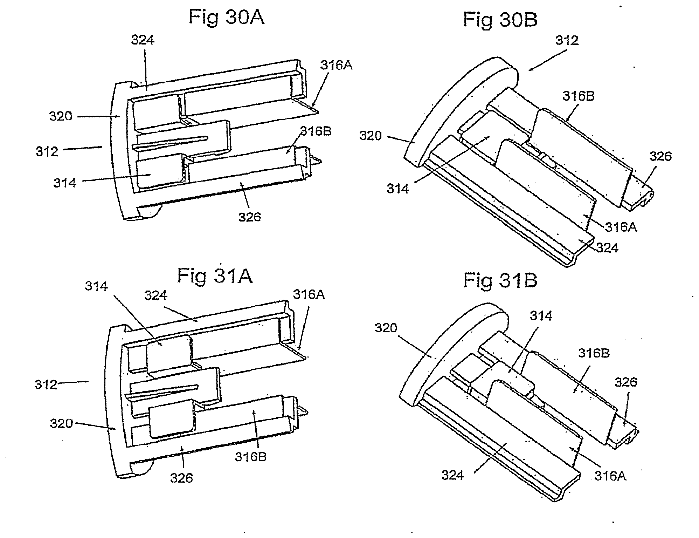

To assemble the carrier assembly 308, the latch 314 is positioned between the rails 324 and 326 with the flanges 376 and 378 riding on the underside of the rails 324 and 326, respectively. The ramp 380 engages the latch support head 336 so that it deflects downwardly and the latch 314 is then slid so that it is supported on the latch support 334. Thus, the latch 314 is slidable on the latch support 334. In an unlatched position, as shown in Figs 30A and 30B, the latch 314 is proximate the carrier end wall 320. The capture electrodes 316A and 316B are then positioned with the connecting portions 354 and 364 on the underside of the respective rails 324 and 326, as shown. As seen in Figs 30A and 30B, there is a slight space between the latch 314 and the capture electrodes 316A and 316B. To maintain the capture electrodes 316A and 316B on the carrier 312, the latch 314 is slid on the latch support 334 away from the wall 320 to the position shown in Figs 31A and 31B to sandwich and maintain the capture electrodes 316A and 316B secured to the respective rails 324 and 326. With the capture electrodes 316A and 316B in position, the terminal ends 358 and 368, respectively, are visible in the windows 330 and 332, respectively. Moreover, the terminal ends 358 and 368 may nest in respective tabs 384 and 386 at distal ends of the rails 324 and 326.

As such, the capture electrodes 316A and 316B are removably secured to the carrier 312. The latch 314 is adapted to secure the capture electrodes 316A and 316B to the carrier 312. Moreover, the ledges 382 and 384 act as end stops and prevent sliding of the capture electrodes 316A and 316B on the respective rails 324 and 326. Downward pressure on the latch 314 permits release of the end stops and removal of the capture electrodes 316A and 316B.

The capture electrodes 316A and 316B may be fabricated by laser cutting of stainless steel sheet. The latch 314 and carrier 312 may be formed of plastic molded parts or fabricated by stereographic printing.

The carrier assembly 308 can be used with any device configuration described herein and is particularly adapted to an electrokinetic propulsion device. Likewise, the device can be adapted to other circuit configurations.

The propulsion device 300, with the carrier assembly 308, may be used for analyzing aerosol particles. Particularly, the aerosol particles, which are charged by the wire electrode, such as the electrode 21 of Fig. 2, may be deposited on the capture electrodes 316A and 316B from a volume of air propelled electrokinetically, as described above, entering the housing 302 through the grill 304. The carrier assembly 308 can be removed from the housing 302 and the capture electrodes 316A and 316B placed in an extraction vessel with a predetermined volume of extraction fluid being used for analysis of the aerosol particles.

Moreover, non-conductive sleeves 390 and 392 may be placed over the capture electrodes 316A and 316B, respectively, to capture aerosol particles, as generally discussed above relative to the capture means 42. The sleeves 390 and 392 are formed of a non-conductive fabric which may be folded over and stitched at opposite ends 394 to fit snugly over the electrode portions 352 and 362, respectively.

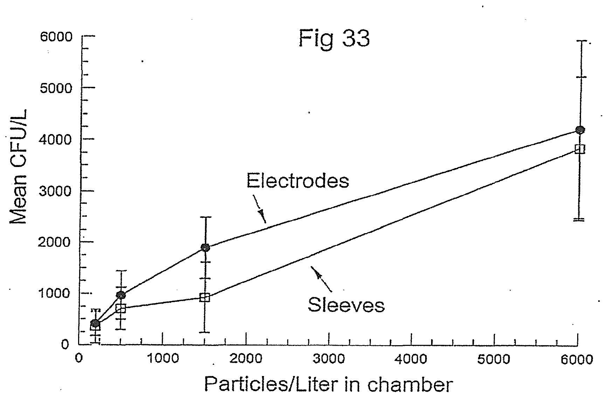

Fig 33 illustrates results that may be obtained with the removable electrodes for a potential biowarfare virus. In an exemplary test, the virus suspension, Venezuelan Equine Encephalitis Virus, previously inactivated with gamma irradiation, was diluted in water and aerosolized in a controlled environment chamber. Various aerosol particle concentrations were released into the chamber and the electrokinetic device with electrode assembly as in Fig 32, was run for 30 minutes in this atmosphere. In parallel, a series was run with the electrodes entirely covered with non-conductive sleeves 390 and 392 fabricated with silk. The sleeves and the electrodes were removed from the devices, placed in tubes with 1 mL of Tris-buffered saline, 0.05% Tween 20 and 1% bovine serum albumin. They were agitated for 10 minutes with a vortex mixer. A volume of 10 µL of each sample was placed in a 50 µL reaction mixture for reverse transcriptase quantitative PCR and the viral genome amplified in an Applied Biosystems 7500 FastDx Real-Time PCR System. The PCR was calibrated with viral suspension of known titer and the results calculated using the PCR values, the calibration and the volume flow for each individual electrokinetic device. These results are plotted as CFU/L of air in the chamber. The flags in the graph are standard deviations from about 10 repetitions. Fig 33 shows that the removable electrodes perform better than the silk sleeve disposables.

While Fig 33 exemplifies the use for an example of a virus, it is clear that the methodology can be applied to any method of analysis of captured particles, whether it be by PCR, immunoassays, colorimetric or fluorimetric assays, mass spectrometry or any other known assayed method which can operate on a liquid extract derived from a removable electrode. The immunoassays may be for allergens, and may also be used for determination of bacterial endotoxin by colorimetry or fluorimetry using the Limulus Amebocyte Lysate assay. The combination with allergen testing is useful since endotoxin is a potentiating agent for allergy-induced asthma.

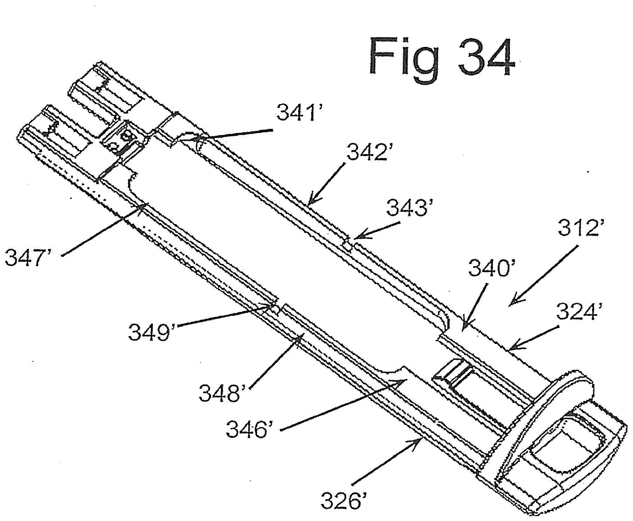

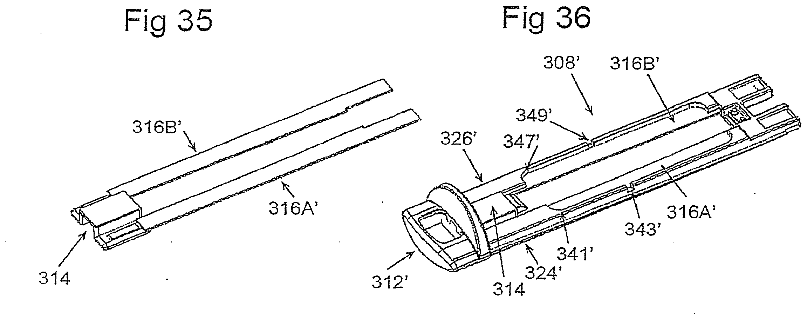

Figs 34-36 illustrate an alternative removable carrier assembly 308'. For simplicity elements which correspond to the removable carrier assembly 308 are identified with similar reference numerals with a prime symbol.

The carrier 312' differs from the carrier 312 in that the rail planar walls 340' and 346' include elongate cutaway portions 341' and 347' and the outer walls 342' and 348' include frangible breakpoints formed by respective notches 343' and 349'. Also, the capture electrodes 316A' and 316B' are flat metal plates. As such, the cutaway portions 341' and 347' expose portions of the respective capture electrodes 316A' and 316B' for deposition of aerosol particles. The latch 314 is unchanged.

As is apparent, the capture electrodes 316A and 316B could also be used with the carrier 312'

The use of the breakpoints formed by the notches 343' and 349', along with the cutaway portions 341' and 347' enables the carrier 312' to snap at the frangible breakpoints for removal of the capture electrodes 316A' and 316B'.

Further applications to capture of entities to be assayed in dielectric media other than air can be created using the same principles as enunciated throughout this document. The dielectric fluid medium may further include non-conductive liquids, such as oils. Oils may be sampled for the presence of contaminants, contaminating organisms or bio-degrading organisms.

## Claims

1. A method for analyzing aerosol particles, comprising:
providing an electrokinetic propulsion device (300) including a housing (302) having an opening and enclosing a high voltage electrode to generate a plasma of electrically charged particles, and a carrier assembly (308) removably receivable in the housing (302), the carrier assembly (308) comprising a non-conductive carrier (312) and a capture electrode (316A, 316B) removably secured to the carrier (312);
depositing aerosol particles on said capture electrode (316A, 316B) from a volume of air entering through said opening and propelled electrokinetically through said device (300) for a select period of time;
removing said capture electrode (316A, 316B) from said carrier and extracting the captured aerosol particles from the capture electrode (316A, 316B); and
analyzing the captured aerosol particles using a bio-specific assay to determine particle concentration in the volume of air.

2. The method according to claim 1, further comprising:
placing said capture electrode (316A, 316B) in an extraction vessel after removing said capture electrode (316A, 316B);
adding a predetermined volume of extraction fluid to said extraction vessel;
agitating said capture electrode (316A, 316B) in said extraction fluid for a predetermined time,
wherein all or part of said extraction fluid is added to a reaction mixture for analysis of said aerosol particles.

3. The method according to claim 2 wherein said carrier assembly comprising a latch slideably received on the carrier to removably secure the capture electrode (316A, 316B) to the carrier.

4. The method according to claim 2 wherein said carrier assembly engages with the housing (302) of said electrokinetic propulsion device (300) to provide functional alignment of capture electrodes (316A, 316B) with counter electrode or electrodes within said device.

5. The method according to claim 1 wherein incident to the carrier assembly being received in the housing (302), the high voltage electrode is subject to a voltage so that flow of charged aerosol particles generates a net air flow through the housing (302) and said charged aerosol particles are deposited on the capture electrode (316A, 316B).

6. The method according to claim 1 wherein the propulsion device further comprises a non-conductive sleeve carried on the capture electrode (316A, 316B) so that said charged aerosol particles are deposited on the sleeve.

7. The method according to claim 1 wherein the carrier comprises an end wall connected to an elongate plastic rail and the capture electrode (316A, 316B) is carried on the rail.

8. The method according to claim 7 wherein a latch support extends from the end wall proximate the rail and a latch is slideably received on the latch support to removably secure the capture electrode (316A, 316B) to the rail.

9. The method according to claim 8 wherein the latch comprises an end stop to limit movement of the capture electrode (316A, 316B) on the rail.

10. The method according to claim 7 wherein the capture electrode (316A, 316B) comprises a metal sheet turned to define a connecting portion received on the rail and an upwardly extending electrode portion.

11. The method according to claim 1 wherein the carrier includes a frangible breakpoint for removal of the capture electrode (316A, 316B).

12. The method according to claim 1 wherein the opening in the housing (302) includes a grill (304); and
the non-conductive carrier (312) includes first and second elongate rails (324, 326) and respective first and second capture electrodes (316A and 3168) removably secured to the first and second elongate rails (324, 326).

## Patentansprüche

1. Verfahren zum Analysieren von Aerosolpartikeln, umfassend:
Bereitstellen einer elektrokinetischen Antriebsvorrichtung (300), beinhaltend ein Gehäuse (302), das eine Öffnung aufweist und eine Hochspannungselektrode umschließt, um ein Plasma von elektrisch geladenen Partikeln zu erzeugen, und eine Trägerbaugruppe (308), die entfernbar in dem Gehäuse (302) aufgenommen werden kann, wobei die Trägerbaugruppe (308) einen nicht leitenden Träger (312) und eine Fangelektrode (316A, 316B) umfasst, die entfernbar an dem Träger (312) gesichert ist;
Abscheiden von Aerosolpartikeln auf der Fangelektrode (316A, 316B) aus einem Luftvolumen, das durch die Öffnung eintritt und für einen ausgewählten Zeitraum elektrokinetisch durch die Vorrichtung (300) angetrieben wird;
Entfernen der Fangelektrode (316A, 316B) von dem Träger und Extrahieren der aufgefangenen Aerosolpartikel von der Fangelektrode (316A, 316B); und
Analysieren der aufgefangenen Aerosolpartikel unter Verwendung eines biospezifischen Assays, um die Partikelkonzentration in dem Luftvolumen zu bestimmen.

2. Verfahren nach Anspruch 1, ferner umfassend:
Platzieren der Fangelektrode (316A, 316B) in einem Extraktionsgefäß nach dem Entfernen der Fangelektrode (316A, 316B);
Hinzugeben eines vorgegebenen Volumens von Extraktionsfluid zu dem Extraktionsgefäß;
Hin- und Herbewegen der Fangelektrode (316A, 316B) in dem Extraktionsfluid für eine vorgegebene Zeit,
wobei das gesamte oder ein Teil des Extraktionsfluid (s) zur Analyse der Aerosolpartikel zu einem Reaktionsgemisch hinzugegeben wird.

3. Verfahren nach Anspruch 2, wobei die Trägerbaugruppe eine Verriegelung umfasst, die verschiebbar an dem Träger aufgenommen wird, um die Fangelektrode (316A, 316B) entfernbar an dem Träger zu sichern.

4. Verfahren nach Anspruch 2, wobei die Trägerbaugruppe in das Gehäuse (302) der elektrokinetischen Antriebsvorrichtung (300) eingreift, um eine funktionale Ausrichtung von Fangelektroden (316A, 316B) mit einer Gegenelektrode oder Elektroden in der Vorrichtung bereitzustellen.

5. Verfahren nach Anspruch 1, wobei die Hochspannungselektrode in Verbindung mit der Aufnahme der Trägerbaugruppe in dem Gehäuse (302) einer Spannung unterliegt, sodass ein Strom von geladenen Aerosolpartikeln einen Nettoluftstrom durch das Gehäuse (302) erzeugt und die geladenen Aerosolpartikel auf der Fangelektrode (316A, 316B) abgeschieden werden.

6. Verfahren nach Anspruch 1, wobei die Antriebsvorrichtung ferner eine nicht leitende Hülle umfasst, die von der Fangelektrode (316A, 316B) getragen wird, sodass die geladenen Aerosolpartikel auf der Hülle abgeschieden werden.

7. Verfahren nach Anspruch 1, wobei der Träger eine Stirnwand umfasst, die mit einer länglichen Kunststoffschiene verbunden ist und die Fangelektrode (316A, 316B) von der Schiene getragen wird.

8. Verfahren nach Anspruch 7, wobei sich eine Verriegelungsstütze von der Stirnwand in der Nähe der Schiene erstreckt und eine Verriegelung verschiebbar an der Verriegelungsstütze aufgenommen wird, um die Fangelektrode (316A, 316B) entfernbar an der Schiene zu sichern.

9. Verfahren nach Anspruch 8, wobei die Verriegelung einen Endanschlag umfasst, um die Bewegung der Fangelektrode (316A, 316B) auf der Schiene zu begrenzen.

10. Verfahren nach Anspruch 7, wobei die Fangelektrode (316A, 316B) ein gedrehtes Metallblech umfasst, um einen Verbindungsteil, der auf der Schiene aufgenommen wird, und einen sich nach oben erstreckenden Elektrodenteil zu definieren.

11. Verfahren nach Anspruch 1, wobei der Träger eine zerbrechliche Bruchstelle zum Entfernen der Fangelektrode (316A, 316B) beinhaltet.

12. Verfahren nach Anspruch 1, wobei die Öffnung in dem Gehäuse (302) ein Gitter (304) beinhaltet; und
der nicht leitende Träger (312) eine erste und zweite längliche Schiene (324, 326) und eine entsprechende erste und zweite Fangelektrode (316A und 3168) beinhaltet, die entfernbar an der ersten und zweiten länglichen Schiene (324, 326) gesichert sind.

## Revendications

1. Procédé d'analyse de particules d'aérosol, comprenant :
la fourniture d'un dispositif de propulsion électrocinétique (300) incluant un boîtier (302) ayant une ouverture et enfermant une électrode à haute tension pour générer un plasma de particules électriquement chargées, et un ensemble de support (308) apte à être reçu de manière amovible dans le boîtier (302), l'ensemble de support (308) comprenant un support non conducteur (312) et une électrode de capture (316A, 316B) fixée au support (312) de manière amovible ;
le dépôt de particules d'aérosol sur ladite électrode de capture (316A, 316B) en provenance d'un volume d'air entrant à travers ladite ouverture et propulsé de manière électrocinétique à travers ledit dispositif (300) pendant une période de temps sélectionnée ;
le retrait de ladite électrode de capture (316A, 316B) dudit support et l'extraction des particules d'aérosol capturées à partir de l'électrode de capture (316A, 316B) ; et
l'analyse des particules d'aérosol capturées à l'aide d'un dosage bio-spécifique pour déterminer la concentration en particules dans le volume d'air.

2. Procédé selon la revendication 1, comprenant en outre :
la mise en place de ladite électrode de capture (316A, 316B) dans une cuve d'extraction après le retrait ladite électrode de capture (316A, 316B) ;
l'ajout d'un volume prédéterminé de fluide d'extraction à ladite cuve d'extraction ;
l'agitation de ladite électrode de capture (316A, 316B) dans ledit fluide d'extraction pendant une durée prédéterminée,
dans lequel tout ou partie dudit fluide d'extraction est ajouté à un mélange réactionnel pour l'analyse desdites particules d'aérosol.

3. Procédé selon la revendication 2 dans lequel ledit ensemble de support comprend un verrou reçu de manière coulissante sur le support pour fixer l'électrode de capture (316A, 316B) au support de manière amovible.

4. Procédé selon la revendication 2 dans lequel ledit ensemble de support vient en prise avec le boîtier (302) dudit dispositif de propulsion électrocinétique (300) pour fournir un alignement fonctionnel des électrodes de capture (316A, 316B) avec une contre-électrode ou des électrodes à l'intérieur dudit dispositif.

5. Procédé selon la revendication 1 dans lequel, en conséquence de la réception de l'ensemble de support dans le boîtier (302), l'électrode à haute tension est soumise à une tension de sorte qu'un flux de particules d'aérosol chargées génère un flux d'air net à travers le boîtier (302) et lesdites particules d'aérosol chargées sont déposées sur l'électrode de capture (316A, 316B).

6. Procédé selon la revendication 1 dans lequel le dispositif de propulsion comprend en outre un manchon non conducteur porté sur l'électrode de capture (316A, 316B) de sorte que lesdites particules d'aérosol chargées sont déposées sur le manchon.

7. Procédé selon la revendication 1 dans lequel le support comprend une paroi d'extrémité connectée à un rail en plastique allongé et l'électrode de capture (316A, 316B) est portée sur le rail.

8. Procédé selon la revendication 7 dans lequel un support de verrou s'étend à partir de la paroi d'extrémité à proximité du rail et un verrou est reçu de manière coulissante sur le support de verrou pour fixer l'électrode de capture (316A, 316B) au rail de manière amovible.

9. Procédé selon la revendication 8 dans lequel le verrou comprend une butée d'extrémité pour limiter le mouvement de l'électrode de capture (316A, 316B) sur le rail.

10. Procédé selon la revendication 7 dans lequel l'électrode de capture (316A, 316B) comprend une feuille métallique orientée pour définir une partie de connexion reçue sur le rail et une partie d'électrode s'étendant vers le haut.

11. Procédé selon la revendication 1 dans lequel le support comprend un point de rupture cassable pour le retrait de l'électrode de capture (316A, 316B).

12. Procédé selon la revendication 1 dans lequel l'ouverture dans le boîtier (302) inclut une grille (304) ; et
le support non conducteur (312) inclut des premier et second rails allongés (324, 326) et des première et seconde électrodes de capture respectives (316A et 3168) fixées aux premier et second rails allongés (324, 326) de manière amovible.
